# EUROPEAN PATENT APPLICATION

(11) **EP 4 701 154 A1**
(43) Date of publication of application: **25.02.2026**
(21) Application number: 24806113.7
(22) Date of filing: 06.02.2024
(51) Int. Cl.: H04L 47/12

(54) **CONGESTION CONTROL METHOD, APPARATUS, AND SYSTEM**

(30) Priority: 18.05.2023 CN 202310566307
(71) Applicant: Huawei Technologies Co., Ltd., Shenzhen, Guangdong 518129 (CN)
(72) Inventor: SHI, Hang, Shenzhen, Guangdong 518129 (CN); ZHU, Keyi, Shenzhen, Guangdong 518129 (CN); ZHOU, Tianran, Shenzhen, Guangdong 518129 (CN); HUANG, Hongyi, Shenzhen, Guangdong 518129 (CN)
(74) Representative: Goddar, Heinz J.
(86) International application number: PCT/CN2024/076402
(87) International publication number: WO 2024/234750

(57) **Abstract**

A congestion control method, apparatus, and system are provided, and pertain to the field of network technologies. The method includes: A first device obtains a first packet. The first packet includes congestion detection indication information and a congestion information field. The congestion detection indication information indicates a device to obtain congestion information corresponding to the device. The congestion information field is used to carry the congestion information. The first device obtains, based on the congestion detection indication information, congestion information corresponding to the first device. The first device updates the congestion information field based on the congestion information corresponding to the first device. In this application, the congestion information field in the first packet can carry a large amount of congestion information, so that an end-side device performs accurate congestion control based on the congestion information carried in the congestion information field.

## Description

This application claims priority to Chinese Patent Application No. 202310566307.7, filed on May 18, 2023 and entitled "CONGESTION CONTROL METHOD, APPARATUS, AND SYSTEM", which is incorporated herein by reference in its entirety.

### TECHNICAL FIELD

This application relates to the field of network technologies, and in particular, to a congestion control method, apparatus, and system.

### BACKGROUND

According to an explicit congestion notification (explicit congestion notification, ECN) technology, the last two bits in a traffic class (traffic class, TC) field in an internet protocol (internet protocol, IP) header are used to mark a network congestion status. When sending a packet, a transmit-end device sets values of two bits in the packet to 01 or 10 to enable an ECN function. In a process in which a network device forwards the packet, if congestion occurs on the network device, the network device sets the values of the two bits in the packet to 11. A receive-end device determines, based on the values of the two bits in the packet, whether the packet undergoes congestion. The receive-end device sends a congestion status of the received packet to the transmit-end device by using an acknowledgment (acknowledgment, ACK) packet of a transport layer. The transmit-end device adjusts a send window, a sending rate, and the like based on the congestion status to perform congestion control.

However, the foregoing two bits in the packet can indicate only whether the packet undergoes congestion. Consequently, it is difficult for an end-side device (including a transmit-end device and a receive-end device) to perform accurate congestion control based on the two bits.

### SUMMARY

This application provides a congestion control method, apparatus, and system. Technical solutions of this application are as follows.

According to a first aspect, a congestion control method is provided. The method includes: A first device obtains a first packet. The first packet includes congestion detection indication information and a congestion information field. The congestion detection indication information indicates a device to obtain congestion information corresponding to the device. The congestion information field is used to carry the congestion information. The first device obtains, based on the congestion detection indication information, congestion information corresponding to the first device. The first device updates the congestion information field based on the congestion information corresponding to the first device. In other words, the first device updates the congestion information in the congestion information field based on the congestion information corresponding to the first device.

In the technical solutions provided in this application, the congestion detection indication information and the congestion information field are set in the first packet. The congestion detection indication information indicates the device to obtain the congestion information corresponding to the device. The congestion information field is used to carry the congestion information. In this case, a device on a path of the first packet obtains, based on the congestion detection indication information, congestion information corresponding to the device, and updates the congestion information field based on the congestion information corresponding to the device. The congestion information field can carry a large amount of congestion information. This helps an end-side device perform accurate congestion control based on the congestion information carried in the congestion information field.

In addition, in the technical solutions provided in this application, the device on the path of the first packet updates the congestion information in the congestion information field in the first packet in a process of forwarding the first packet, instead of adding congestion information to the first packet hop by hop, to avoid a case in which the first packet increases hop by hop. The technical solutions ensure encapsulation efficiency of the first packet, and can be applied to a long-distance multi-hop transmission scenario.

Optionally, the congestion information includes at least one of first congestion information and second congestion information. The first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet. The accumulated processing delay is an accumulated value of a processing delay of the first packet in the device on the transmission path of the first packet. A processing delay of the first packet in any device is a queuing delay of the first packet in the device (that is, a duration for which the first packet stays in a queue that is used to buffer the first packet and that is in the device). The accumulated processing delay of the first packet is an accumulated value of a queuing delay of the first packet in the device on the transmission path of the first packet. The accumulated processing delay is also an accumulated queuing delay. Alternatively, a processing delay of the first packet in any device includes a queuing delay of the first packet in the device and a sending delay of the first packet in the device (that is, a sending delay of the first packet at an interface that is configured to send the first packet and that is in the device).

Optionally, the utilization rate of the interface that is configured to send the first packet and that is in the device includes at least one of the following: bandwidth utilization of the interface, and link utilization of the interface. The link utilization rate of the interface is utilization in consideration of bandwidth of the interface and buffer (buffer) space of the interface. The link utilization rate is also referred to as an inflight (inflight) utilization rate.

Optionally, the congestion detection indication information indicates the device to obtain the first congestion information corresponding to the device, and the congestion information field is used to carry the first congestion information. That the first device obtains, based on the congestion detection indication information, the congestion information corresponding to the first device includes: The first device obtains, based on the congestion detection indication information, the first congestion information corresponding to the first device. Correspondingly, that the first device updates the congestion information field based on the congestion information corresponding to the first device includes: When a relationship between the first congestion information corresponding to the first device and the first congestion information in the congestion information field meets a preset condition, the first device updates the first congestion information in the congestion information field based on the first congestion information corresponding to the first device. For example, the first device replaces the first congestion information in the congestion information field with the first congestion information corresponding to the first device.

In the technical solutions provided in this application, in a process of forwarding the first packet, the device on the path of the first packet updates the first congestion information in the congestion information field based on the first congestion information corresponding to the device, instead of adding first congestion information to the first packet hop by hop, to avoid a case in which the first packet increases hop by hop.

Optionally, the preset condition includes any one of the following: a value of the first congestion information corresponding to the first device is greater than a value of the first congestion information in the congestion information field; or a value of the first congestion information corresponding to the first device is less than or equal to a value of the first congestion information in the congestion information field.

In the technical solutions provided in this application, when the preset condition is that the value of the first congestion information corresponding to the first device is greater than the value of the first congestion information in the congestion information field, and the value of the first congestion information corresponding to the first device is greater than the value of the first congestion information in the congestion information field, the first device updates the first congestion information in the congestion information field based on the first congestion information corresponding to the first device. It can be ensured that the value of the first congestion information in the congestion information field is a maximum value in values of first congestion information corresponding to devices on the path of the first packet. The first packet carries the maximum value of the first congestion information corresponding to the devices on the path of the first packet, and is sent to the second device (for example, a receive-end device). When the preset condition is that the value of the first congestion information corresponding to the first device is less than or equal to the value of the first congestion information in the congestion information field, and the value of the first congestion information corresponding to the first device is less than or equal to the value of the first congestion information in the congestion information field, the first device updates the first congestion information in the congestion information field based on the first congestion information corresponding to the first device. It can be ensured that the value of the first congestion information in the congestion information field is a minimum value in values of first congestion information corresponding to devices on the path of the first packet. The first packet carries the minimum value of the first congestion information corresponding to the devices on the path of the first packet, and is sent to the second device (for example, the receive-end device).

Optionally, the congestion detection indication information indicates the device to obtain the second congestion information corresponding to the device, and the congestion information field is used to carry the second congestion information. That the first device obtains, based on the congestion detection indication information, the congestion information corresponding to the first device includes: The first device obtains, based on the congestion detection indication information, the second congestion information corresponding to the first device. Correspondingly, that the first device updates the congestion information field based on the congestion information corresponding to the first device includes: The first device updates the second congestion information in the congestion information field based on the second congestion information corresponding to the first device. For example, the first device replaces the second congestion information in the congestion information field with the second congestion information corresponding to the first device.

In the technical solutions provided in this application, a value of the second congestion information corresponding to the device on the path of the first packet gradually increases, and the first device updates the second congestion information in the congestion information field based on the second congestion information corresponding to the first device. It can ensure that the value of the second congestion information in the congestion information field is a maximum value in a value of the second congestion information corresponding to the device on the path of the first packet. The first packet carries the maximum value of the second congestion information corresponding to the device on the path of the first packet, and is sent to the receive-end device.

Optionally, the first packet includes an advanced explicit congestion notification (advanced explicit congestion notification, AECN) header, and the AECN header includes the congestion detection indication information and the congestion information field. In other words, in this application, the congestion detection indication information and the congestion information are set in the AECN header. Compared with ECN bits (the last two bits in a TC field in an IP header), the AECN header can carry more congestion information, so that the end-side device can perform accurate congestion control.

Optionally, the first packet includes an internet protocol version 6 (internet protocol version 6, IPv6) extension header, and the AECN header is in the IPv6 extension header. For example, the IPv6 extension header is a hop-by-hop (hop-by-hop, HBH) header.

Optionally, the first packet includes an internet control message protocol (internet control message protocol, ICMP) header, and the AECN header is in the ICMP header.

Optionally, the first device is a transmit-end device. That the first device obtains the first packet includes: The first device generates the first packet.

In the technical solutions provided in this application, the first packet is generated by the transmit-end device. The transmit-end device may obtain, based on the congestion detection indication information in the first packet, congestion information corresponding to the transmit-end device, and update the congestion information field in the first packet based on the congestion information corresponding to the transmit-end device, so that a congestion status of the transmit-end device can be detected in this application.

Optionally, the first device is a network device (for example, the first device is any network device on the transmission path of the first packet). That the first device obtains the first packet includes: The first device receives the first packet from the transmit-end device.

In the technical solutions provided in this application, the first packet is from the transmit-end device. Therefore, the transmit-end device may obtain, based on the congestion detection indication information in the first packet, the congestion information corresponding to the transmit-end device, and update the congestion information field in the first packet based on the congestion information corresponding to the transmit-end device, so that the congestion status of the transmit-end device can be detected in this application.

Optionally, the first device is a network device (for example, the first device is a network device directly connected to the transmit-end device). That the first device obtains the first packet includes: The first device receives an original packet from the transmit-end device; and the first device generates the first packet based on the original packet.

Optionally, that the first device generates the first packet based on the original packet includes: The first device constructs the first packet based on the original packet; or the first device encapsulates the congestion detection indication information and the congestion information field into the original packet, to obtain the first packet; or the first device copies the original packet to obtain a copied packet, and the first device encapsulates the congestion detection indication information and the congestion information field into the copied packet, to obtain the first packet.

Optionally, after the first device updates the congestion information field, the method further includes: The first device sends the first packet.

Optionally, the first device is a transmit-end device, and the method further includes: The first device receives a second packet from the second device. The second packet corresponds to the first packet. The first device performs congestion control on a receive-end device of the first packet based on the second packet. The second packet is generated by the second device based on the congestion information field in the first packet received by the second device.

In the technical solutions provided in this application, the second device generates the second packet based on the congestion information field in the first packet received by the second device, and sends the second packet to the transmit-end device. The transmit-end device performs congestion control on the receive-end device of the first packet based on the second packet, to improve accuracy of congestion control performed by the transmit-end device.

Optionally, the second packet includes at least one of the following: the congestion information in the congestion information field; and a congestion control instruction, where the congestion control instruction is determined based on the congestion information in the congestion information field.

In the technical solutions provided in this application, when the second packet includes the congestion information in the congestion information field but does not include the congestion control instruction, the transmit-end device may determine the congestion control instruction based on the congestion information in the congestion information field, and execute the congestion control instruction to perform congestion control on the receive-end device; or when the second packet includes the congestion control instruction but does not include the congestion information in the congestion information field, the transmit-end device executes the congestion control instruction to perform congestion control on the receive-end device; or when the second packet includes the congestion information in the congestion information field and the congestion control instruction, the transmit-end device determines the congestion control instruction based on the congestion information in the congestion information field, and the transmit-end device performs congestion control on the receive-end device based on the congestion control instruction determined by the transmit-end device and the congestion control instruction in the second packet.

Optionally, the second packet is a probe packet or an acknowledgment (acknowledgment, ACK) packet of a transport layer.

Optionally, the first packet is a service packet, a probe packet, or a copied packet of a service packet.

Optionally, the second device is the receive-end device or a network device.

According to a second aspect, a congestion control method is provided. The method includes: A second device receives a first packet. The first packet includes congestion detection indication information and a congestion information field. The congestion detection indication information indicates a device to obtain congestion information corresponding to the device. The congestion information field is used to carry the congestion information. The second device sends a second packet to a transmit-end device based on the congestion information field. The second packet indicates the transmit-end device to perform congestion control on a receive-end device of the first packet.

In the technical solutions provided in this application, the congestion detection indication information and the congestion information field are set in the first packet. The congestion detection indication information indicates the device to obtain the congestion information corresponding to the device. The congestion information field is used to carry the congestion information. In this case, a device on a path of the first packet obtains, based on the congestion detection indication information, congestion information corresponding to the device, and updates the congestion information field based on the congestion information corresponding to the device. The second device sends the second packet to the transmit-end device based on the congestion information field. The transmit-end device performs congestion control on the receive-end device of the first packet based on the second packet. The congestion information field can carry a large amount of congestion information. Therefore, the second packet sent by the second device to the transmit-end device based on the congestion information field may indicate the transmit-end device to perform accurate congestion control on the receive-end device.

Optionally, the second packet includes at least one of the following: the congestion information in the congestion information field; and a congestion control instruction, where the congestion control instruction is determined based on the congestion information in the congestion information field.

Optionally, the congestion information includes at least one of first congestion information and second congestion information. The first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet. The accumulated processing delay is an accumulated value of a processing delay of the first packet in the device on the transmission path of the first packet. A processing delay of the first packet in any device is a queuing delay of the first packet in the device. The accumulated processing delay of the first packet is an accumulated value of a queuing delay of the first packet in the device on the transmission path of the first packet. The accumulated processing delay is also an accumulated queuing delay. Alternatively, a processing delay of the first packet in any device includes a queuing delay of the first packet in the device and a sending delay of the first packet in the device.

Optionally, the utilization rate of the interface that is configured to send the first packet and that is in the device includes at least one of the following: bandwidth utilization of the interface, and link utilization of the interface. The link utilization rate of the interface is utilization in consideration of bandwidth of the interface and buffer (buffer) space of the interface. The link utilization rate is also referred to as an inflight (inflight) utilization rate.

Optionally, the first packet includes an AECN header, and the AECN header includes the congestion detection indication information and the congestion information field.

Optionally, the first packet includes an IPv6 extension header, and the AECN header is in the IPv6 extension header.

Optionally, the first packet includes an ICMP header, and the AECN header is in the ICMP header.

Optionally, the first packet is a service packet, a probe packet, or a copied packet of a service packet.

Optionally, the second packet is a probe packet or an ACK packet of a transport layer.

Optionally, the second device is the receive-end device or a network device.

According to a third aspect, a congestion control apparatus is provided, and is used in a first device. The congestion control apparatus includes modules configured to perform the method provided in any one of the first aspect or any optional manner of the first aspect.

Optionally, the congestion control apparatus includes:
an obtaining module, configured to obtain a first packet, where the first packet includes congestion detection indication information and a congestion information field, the congestion detection indication information indicates a device to obtain congestion information corresponding to the device, and the congestion information field is used to carry the congestion information;
a detection module, configured to obtain, based on the congestion detection indication information, congestion information corresponding to the first device; and
an update module, configured to update the congestion information field based on the congestion information corresponding to the first device.

Optionally, the congestion information includes at least one of first congestion information and second congestion information. The first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet. The accumulated processing delay is an accumulated value of a processing delay of the first packet in the device on the transmission path of the first packet. A processing delay of the first packet in any device is a queuing delay of the first packet in the device. The accumulated processing delay of the first packet is an accumulated value of a queuing delay of the first packet in the device on the transmission path of the first packet. The accumulated processing delay is also an accumulated queuing delay. Alternatively, a processing delay of the first packet in any device includes a queuing delay of the first packet in the device and a sending delay of the first packet in the device.

Optionally, the utilization rate of the interface includes at least one of the following: bandwidth utilization of the interface, and link utilization of the interface.

Optionally, the congestion detection indication information indicates the device to obtain the first congestion information corresponding to the device, and the congestion information field is used to carry the first congestion information. The detection module is configured to obtain, based on the congestion detection indication information, the first congestion information corresponding to the first device. Correspondingly, the update module is configured to: when a relationship between the first congestion information corresponding to the first device and the first congestion information in the congestion information field meets a preset condition, update the first congestion information in the congestion information field based on the first congestion information corresponding to the first device.

Optionally, the preset condition includes any one of the following: a value of the first congestion information corresponding to the first device is greater than a value of the first congestion information in the congestion information field; or a value of the first congestion information corresponding to the first device is less than or equal to a value of the first congestion information in the congestion information field.

Optionally, the congestion detection indication information indicates the device to obtain the second congestion information corresponding to the device, and the congestion information field is used to carry the second congestion information. The detection module is configured to obtain, based on the congestion detection indication information, the second congestion information corresponding to the first device. Correspondingly, the update module is configured to update the second congestion information in the congestion information field based on the second congestion information corresponding to the first device.

Optionally, the first packet includes an AECN header, and the AECN header includes the congestion detection indication information and the congestion information field.

Optionally, the first packet includes an IPv6 extension header, and the AECN header is in the IPv6 extension header.

Optionally, the first packet includes an ICMP header, and the AECN header is in the ICMP header.

Optionally, the first device is a transmit-end device, and the obtaining module is configured to generate the first packet.

Optionally, the first device is a network device, and the obtaining module is configured to receive the first packet from a transmit-end device.

Optionally, the first device is a network device, and the obtaining module is configured to receive an original packet from a transmit-end device; and generate the first packet based on the original packet.

Optionally, the obtaining module is configured to construct the first packet based on the original packet; or encapsulate the congestion detection indication information and the congestion information field into the original packet, to obtain the first packet; or copy the original packet to obtain a copied packet, and encapsulate the congestion detection indication information and the congestion information field into the copied packet, to obtain the first packet.

Optionally, the congestion control apparatus further includes: a sending module, configured to send the first packet after the update module updates the congestion information field based on the congestion information corresponding to the first device.

Optionally, the first device is a transmit-end device, and the congestion control apparatus further includes:
a receiving module, configured to receive a second packet from a second device, where the second packet corresponds to the first packet; and
a control module, configured to perform congestion control on a receive-end device of the first packet based on the second packet.

Optionally, the second packet includes at least one of the following: the congestion information in the congestion information field; and a congestion control instruction, where the congestion control instruction is determined based on the congestion information in the congestion information field.

Optionally, the second packet is a probe packet or an acknowledgment packet of a transport layer.

Optionally, the first packet is a service packet, a probe packet, or a copied packet of a service packet.

Optionally, the second device is the receive-end device or a network device.

According to a fourth aspect, a congestion control apparatus is provided, and is used in a second device. The congestion control apparatus includes modules configured to perform the method provided in any one of the second aspect or any optional manner of the second aspect.

Optionally, the congestion control apparatus includes:
a receiving module, configured to receive a first packet, where the first packet includes congestion detection indication information and a congestion information field, the congestion detection indication information indicates a device to obtain congestion information corresponding to the device, and the congestion information field is used to carry the congestion information; and
a sending module, configured to send a second packet to a transmit-end device based on the congestion information field, where the second packet indicates the transmit-end device to perform congestion control on a receive-end device of the first packet.

Optionally, the second packet includes at least one of the following: the congestion information in the congestion information field; and a congestion control instruction, where the congestion control instruction is determined based on the congestion information in the congestion information field.

Optionally, the congestion information includes at least one of first congestion information and second congestion information.

The first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet. The accumulated processing delay is an accumulated value of a processing delay of the first packet in the device on the transmission path of the first packet. A processing delay of the first packet in any device is a queuing delay of the first packet in the device. The accumulated processing delay of the first packet is an accumulated value of a queuing delay of the first packet in the device on the transmission path of the first packet. The accumulated processing delay is also an accumulated queuing delay. Alternatively, a processing delay of the first packet in any device includes a queuing delay of the first packet in the device and a sending delay of the first packet in the device.

Optionally, the utilization rate of the interface includes at least one of the following: bandwidth utilization of the interface, and link utilization of the interface.

Optionally, the first packet includes an AECN header, and the AECN header includes the congestion detection indication information and the congestion information field.

Optionally, the first packet includes an IPv6 extension header, and the AECN header is in the IPv6 extension header.

Optionally, the first packet includes an ICMP header, and the AECN header is in the ICMP header.

Optionally, the first packet is a service packet, a probe packet, or a copied packet of a service packet.

Optionally, the second packet is a probe packet or an acknowledgment packet of a transport layer.

Optionally, the second device is the receive-end device or a network device.

The modules in the third aspect and the fourth aspect may be implemented based on software, hardware, or a combination of software and hardware, and may be randomly combined or divided based on specific implementation.

According to a fifth aspect, a congestion control apparatus is provided, including a memory and a processor. The memory is configured to store a computer program. The processor is configured to execute the computer program stored in the memory, so that the congestion control apparatus performs the congestion control method provided in any one of the first aspect or any optional manner of the first aspect.

According to a sixth aspect, a congestion control apparatus is provided, including a memory and a processor. The memory is configured to store a computer program. The processor is configured to execute the computer program stored in the memory, so that the congestion control apparatus performs the congestion control method provided in any one of the second aspect or any optional manner of the second aspect.

According to a seventh aspect, a congestion control system is provided. The congestion control system includes a first device and a second device. The first device includes the congestion control apparatus provided in any one of the third aspect or any optional implementation of the third aspect, and the second device includes the congestion control apparatus provided in the fourth aspect. Alternatively, the first device includes the congestion control apparatus provided in the fifth aspect, and the second device includes the congestion control apparatus provided in the sixth aspect.

According to an eighth aspect, a computer-readable storage medium is provided. The computer-readable storage medium stores a computer program. When the computer program is executed, the method provided in any one of the first aspect or any optional manner of the first aspect is implemented.

According to a ninth aspect, a computer program product is provided. The computer program product includes a program or code. When the program or the code is executed, the method provided in any one of the first aspect or any optional manner of the first aspect is implemented.

According to a tenth aspect, a chip is provided. The chip includes a programmable logic circuit and/or program instructions. When the chip runs, the method provided in any one of the first aspect or any optional manner of the first aspect is implemented.

For technical effects of the third aspect to the tenth aspect, refer to the technical effects of the first aspect and the second aspect. Details are not described herein again.

### BRIEF DESCRIPTION OF DRAWINGS

FIG. 1 is a diagram of an application scenario according to an embodiment of this application;
FIG. 2 is a flowchart of a congestion control method according to an embodiment of this application;
FIG. 3 is a diagram of an AECN header according to an embodiment of this application;
FIG. 4 is a flowchart of another congestion control method according to an embodiment of this application;
FIG. 5 is a flowchart of still another congestion control method according to an embodiment of this application;
FIG. 6 is a flowchart of yet another congestion control method according to an embodiment of this application;
FIG. 7 is a diagram of a congestion control method according to an embodiment of this application;
FIG. 8A and FIG. 8B are a flowchart of yet another congestion control method according to an embodiment of this application;
FIG. 9 is a diagram of another congestion control method according to an embodiment of this application;
FIG. 10 is a diagram of a congestion control apparatus according to an embodiment of this application;
FIG. 11 is a diagram of another congestion control apparatus according to an embodiment of this application;
FIG. 12 is a diagram of still another congestion control apparatus according to an embodiment of this application; and
FIG. 13 is a diagram of yet another congestion control apparatus according to an embodiment of this application.

### DESCRIPTION OF EMBODIMENTS

The following further describes implementations of this application with reference to the accompanying drawings.

This application relates to an ECN technology, a low latency, low loss and scalable throughput (low latency, low loss and scalable throughput, L4S) technology, an in-situ flow information telemetry (in-situ flow information telemetry, IFIT) technology, an in-band network telemetry (in-band network telemetry, INT) technology, a high precision congestion control (high precision congestion control, HPCC) technology, and a bottleneck bandwidth and round-trip time (bottleneck bandwidth and round-trip propagation time, BBR) congestion control technology. Before the technical solutions of this application are described, a current ECN technology, an L4S technology, an IFIT technology, an INT technology, an HPCC technology, and a BBR congestion control technology are first separately briefly described.

In the ECN technology, the last two bits in a TC field in an IP header are used to mark a network congestion status. When sending a packet, a transmit-end device sets values of two bits in the packet to 01 or 10 to enable an ECN function. In a process in which a network device on a path of the packet forwards the packet, if congestion occurs on the network device, the network device sets the values of the two bits in the packet to 11. A receive-end device determines, based on the values of the two bits in the packet, whether the packet undergoes congestion. The receive-end device sends a congestion status of the received packet to the transmit-end device by using an ACK packet of a transport layer. The transmit-end device performs congestion control based on the congestion status. The ECN technology is widely deployed in data centers. The ECN technology may be used together with a data center transmission control protocol (data center transmission control protocol, DCTCP) congestion control algorithm, to significantly reduce a network transmission delay and a packet loss rate.

An architecture of the ECN technology is reused in the L4S technology, and the last two bits in a TC field in an IP header are used to mark a network congestion status. When sending a packet, the transmit-end device sets values of the two bits in the packet to 01 to enable an L4S function (for example, the packet for which the L4S function is enabled is referred to as an L4S packet). The network device includes a queue dedicated to buffering an L4S packet. In a process of forwarding the packet by the network device, if congestion occurs on the network device, the network device sets values of the two bits in at least a part of packets in the queue to 11. The receive-end device determines, based on the values of the two bits in the packet, whether the packet undergoes congestion. The receive-end device sends a congestion status of the received packet to the transmit-end device by using an ACK packet of a transport layer. The transmit-end device performs congestion control based on the congestion status, to control a delay and a packet loss.

The IFIT technology is a network in-situ flow information telemetry technology. In the IFIT technology, a head node device (for example, the head node device is a network device directly connected to the transmit-end device) adds an IFIT header to a packet. A network device on a path of the packet obtains detection information based on the IFIT header, and reports the detection information to a network controller. The network controller calculates a packet loss, a transmission delay, and the like of a network based on the detection information reported by the network device on the path of the packet. The IFIT technology includes two detection modes: a postcard (postcard) mode and a passport (passport) mode. The postcard mode is also referred to as a hop-by-hop mode. In the postcard mode, each network device on a path of a packet reports detection information to the network controller. The passport mode is also referred to as an end-to-end mode. In the passport mode, the head node device and an intermediate device add detection information obtained by the head node device and the intermediate device to a packet and send the packet to a tail node device (for example, the tail node device is a network device directly connected to the receive-end device). The tail node device uniformly reports, to the network controller, detection information obtained by network devices (including the head node device, the intermediate device, and the tail node device) on the path of the packet.

The INT technology includes a flow detection technology similar to the passport mode in the IFIT technology. A head node device adds an INT header to a packet. A network device on a path of the packet obtains detection information based on the INT header, adds the detection information to the INT header, and sends the INT header to a tail node device. The tail node device reports, to a network controller, the detection information obtained by the network device on the path of the packet, or the tail node device provides the detection information for an end-side device (for example, the receive-end device) to use.

The HPCC technology uses an INT capability of a network device in a data center to perform network detection. For example, a head node device receives a packet from the transmit-end device, and adds an INT header to the packet. A network device on a path of the packet obtains detection information based on the INT header, adds the detection information to the INT header, and sends the INT header to the receive-end device. The receive-end device sends, to the transmit-end device by using an ACK packet of a transport layer, the detection information carried in the INT header. The transmit-end device calculates link utilization of a bottleneck link (the bottleneck link corresponds to a bottleneck interface in the network device, and therefore, the link utilization rate of the bottleneck link is also referred to as link utilization of the bottleneck interface) based on the detection information. The transmit-end device performs congestion control based on the link utilization rate of the bottleneck link. For example, if the link utilization rate of the bottleneck link is less than utilization threshold, the transmit-end device increases a send window; and if the link utilization rate of the bottleneck link is greater than the utilization rate threshold, the transmit-end device decreases the send window.

The BBR congestion control technology implements congestion control by attempting to control a sending rate of the transmit-end device to exactly match a bottleneck bandwidth of the network. The sending rate of the transmit-end device exactly matching the bottleneck bandwidth of the network means that bandwidth occupied by the packet on the network is exactly equal to the bottleneck bandwidth of the network when the transmit-end device sends a packet over the network at the sending rate. Generally, if the bandwidth occupied by the packet on the network is less than the bottleneck bandwidth of the network when the transmit-end device sends the packet over the network at the sending rate, the bandwidth of the network is not fully utilized, which is prone to a bandwidth waste. If the transmit-end device sends a packet over the network at a specific sending rate, and a bandwidth occupied by the packet on the network is greater than the bottleneck bandwidth of the network, the packet needs to be buffered in the network device for a relatively long time, which increases a queuing delay of the packet. Therefore, in the BBR congestion control technology, a convergence point of the sending rate of the transmit-end device should exactly match the bottleneck bandwidth of the network. At this convergence point, an available bandwidth of the network is the largest, and a round-trip delay (round-trip time, RTT) is the smallest. The transmit-end device periodically adjusts the sending rate, and determines the convergence point based on a change status of the RTT of the network after adjusting the sending rate. For example, if the RTT of the network does not increase after the transmit-end device increases the sending rate, it indicates that when the transmit-end device sends a packet at the increased sending rate, a bandwidth occupied by the packet on the network is less than the bottleneck bandwidth of the network, the network has an idle bandwidth resource, and the transmit-end device continues to increase the sending rate. If the RTT of the network decreases after the transmit-end device decreases the sending rate, it indicates that when the transmit-end device sends a packet at the decreased sending rate, a bandwidth occupied by the packet on the network is greater than the bottleneck bandwidth of the network, the network has no idle bandwidth resource, and the transmit-end device continues to decrease the sending rate.

However, in the current ECN technology and the L4S technology, the last two bits in the TC field in the IP header can only indicate whether a packet undergoes congestion, and cannot carry more congestion-related information (only one bit in the two bits actually indicates whether a packet undergoes congestion, and the other bit is considered as an enabling bit). As a result, it is difficult for the end-side device to accurately perform congestion control based on the two bits. In the current IFIT technology, the detection information obtained by the network device can be used only by the network controller, and effective collaboration with the end-side device is not implemented. In the current BBR congestion control technology, a queuing delay of a packet in the network device and a transmission delay (that is, a link delay) of the packet on a link cannot be distinguished. As a result, the transmit-end device needs to continuously perform sawtooth seeking near the convergence point of the sending rate. In the current INT technology and the HPCC technology, in a packet transmission process, the network device adds detection information to the INT header of the packet hop by hop. As a result, the packet increases hop by hop, and packet encapsulation efficiency is affected. These technologies are not applicable to a long-distance multi-hop transmission scenario. For example, according to a protocol, a size of the packet cannot exceed a maximum transmission unit (maximum transmission unit, MTU). If the INT technology or the HPCC technology is applied in the long-distance multi-hop transmission scenario, the packet needs to be set to carry a relatively small amount of application data (for example, a payload of the packet is set to be small), to ensure that the size of the packet does not exceed the MTU after the packet increases hop by hop. This causes low packet encapsulation efficiency and causes a waste of bandwidth resources. If the packet is set to carry a relatively large amount of application data, the network device adds the detection information to the INT header of the packet hop by hop. As a result, the size of the packet may exceed the MTU. In addition, in both the INT technology and the HPCC technology, the detection information is obtained at a granularity of flows, and the end-side device performs related calculation based on the detection information at the granularity of flows. This may cause the end-side device to perform repeated calculation, causing a waste of computing resources of the end-side device. For example, the transmit-end device sends a plurality of flows to the receive-end device. The plurality of flows share a same transmission path. Network devices on the transmission path obtain same detection information based on the plurality of flows. The end-side device (the transmit-end device or the receive-end device) calculates the link utilization rate of the bottleneck link based on the detection information of the plurality of flows. The end-side device performs repeated calculation, which causes a waste of computing resources of the end-side device.

Embodiments of this application provide a congestion control method, apparatus, and system. Congestion detection indication information and a congestion information field are set in a packet. The congestion detection indication information indicates a device to obtain congestion information corresponding to the device. The congestion information field is used to carry the congestion information. In this case, a device (including an end-side device and/or a network device) on a path of the packet obtains, based on the congestion detection indication information, congestion information corresponding to the device, and updates the congestion information field based on the congestion information corresponding to the device. The congestion information field in the packet provided in this application can carry a large amount of congestion information, so that an end-side device performs accurate congestion control based on the congestion information carried in the congestion information field. This is different from the current ECN technology and the L4S technology. Compared with the current IFIT technology, this application can implement effective collaboration between the network device and the end-side device. In this application, the device on the path of the packet updates the congestion information field based on the congestion information, instead of adding information to the packet hop by hop. This is different from the current INT technology and the HPCC technology. In this way, the packet does not increase hop by hop, and packet encapsulation efficiency is not affected. This application is applicable to a long-distance multi-hop transmission scenario. In addition, in this application, the network device may perform calculation hop by hop, thereby avoiding repeated calculation performed by the end-side device. In this application, the network device may calculate an accumulated processing delay of the packet. The accumulated processing delay may be an accumulated queuing delay. The transmit-end device may quickly determine, based on the accumulated processing delay of the packet, whether a sending rate of the transmit-end device is excessively large and causes an extra queuing delay. The transmit-end device does not need to perform sawtooth seeking. This is different from the current BBR congestion control technology.

The following describes the technical solutions of this application. An application scenario of this application is first described.

An application scenario of an embodiment of this application provides a congestion control system. The congestion control system includes a communication network and a plurality of end-side devices that access the communication network. The communication network includes a plurality of network devices. The plurality of network devices are configured to perform packet forwarding between different end-side devices, to implement communication between the different end-side devices. The plurality of network devices include an edge network device and a core network device. The edge network device is located at an edge of the communication network, and is configured to connect the end-side device to the communication network. The core network device is connected between different edge network devices, and is configured to perform packet forwarding between different edge network devices. The communication network may be a data center network (data center network, DCN), a metropolitan area network, a wide area network, a local area network, or the like. Each of the plurality of network devices may be a switch or a router. Types of the plurality of network devices may be the same or different. For example, the plurality of network devices are all switches or routers; or a part of the plurality of network devices is a switch, and the other part of the network devices is a router. The end-side device may be a host, a server, a base station, a virtual machine (virtual machine, VM), or the like. The host may be any possible terminal device such as a smartphone, a tablet computer, a notebook computer, a desktop computer, or an internet of things (internet of things, IoT) device.

In this embodiment of this application, the end-side device that accesses the communication network includes a transmit-end device and a receive-end device, and the congestion control system includes a first device and a second device. The first device may be the transmit-end device or a network device (for example, the network device is directly connected to the transmit-end device). The second device may be the receive-end device or a network device (for example, the network device is directly connected to the receive-end device). A packet transmitted from the transmit-end device to the receive-end device includes a first packet. In a transmission process of the first packet, a device (for example, the first device) on a path of the first packet detects a network congestion status based on the first packet, and sends the network congestion status to the second device. The second device feeds back the network congestion status to the transmit-end device. The transmit-end device performs congestion control on the receive-end device based on the network congestion status.

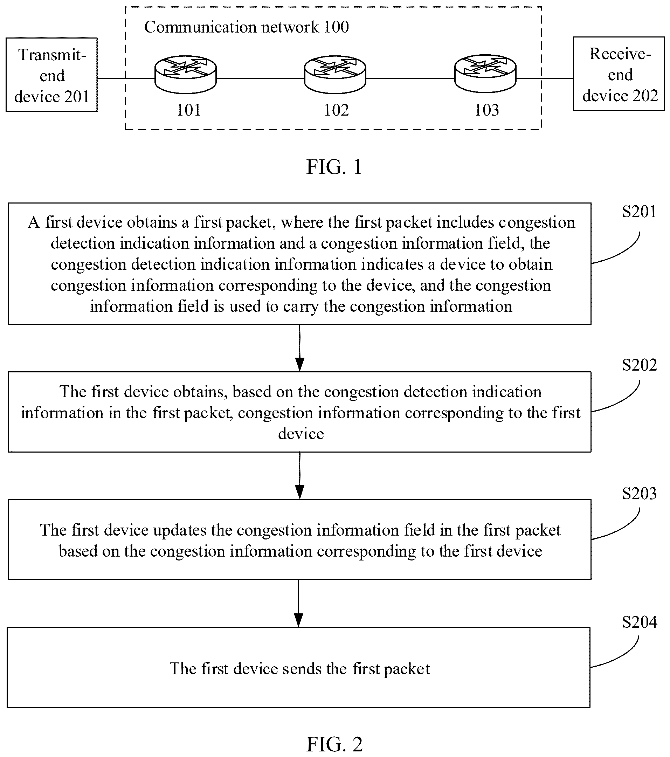

An example in which the first device is a transmit-end device and the second device is the receive-end device is used for description. For example, FIG. 1 is a diagram of an application scenario according to an embodiment of this application. The congestion control system provided in the application scenario includes a communication network 100, and a transmit-end device 201 and a receive-end device 202 that access the communication network 100. The communication network 100 includes network devices 101 to 103. The network device 102 is connected between the network device 101 and the network device 103. Both the network device 101 and the network device 103 may be edge network devices. The network device 102 may be a core network device. The transmit-end device 201 accesses the communication network 100 through the network device 101. The receive-end device 202 accesses the communication network 100 through the network device 103. In this embodiment of this application, a first packet sent from the transmit-end device 201 or the network device 101 to the receive-end device 202 includes congestion detection indication information and a congestion information field. The congestion detection indication information indicates a device on a path of the first packet to obtain congestion information corresponding to the device, and the congestion information field is used to carry the congestion information. Each device in the transmit-end device 201 and the network devices 101 to 103 detects a congestion status of each device based on the congestion detection indication information in a process of sending the first packet, to obtain congestion information of each device, and updates the congestion information field based on the congestion information corresponding to each device (for example, replaces the congestion information in the congestion information field with the congestion information corresponding to each device). After the receive-end device 202 receives the first packet, the receive-end device 202 sends a second packet to the transmit-end device 201 based on the congestion information field in the first packet, to indicate the transmit-end device 201 to perform congestion control on the receive-end device 202. The transmit-end device 201 performs congestion control on the receive-end device 202 based on the second packet, to reduce a network transmission delay, reduce a packet loss rate, ensure bandwidth utilization of the communication network 100, and the like. For example, the transmit-end device 201 adjusts, based on the second packet, a send window, a sending rate, and the like that are used by the transmit-end device 201 to send a packet to the receive-end device 202, to perform congestion control on the receive-end device 202. The first packet is a service packet, a probe packet, or a copied packet of a service packet, and the second packet is a probe packet or an ACK packet. For example, the first packet is a service packet or a copied packet of a service packet, and the second packet is an ACK packet. For another example, the first packet is a probe packet, and the second packet is a probe packet.

It should be noted that the application scenario shown in FIG. 1 is merely used as an example, and FIG. 1 is not used to limit the application scenario of this application. The application scenario of this application may include more or fewer devices than those shown in FIG. 1, and the application scenario may further include another device. For example, the communication network 100 may further include a device (for example, a security device) other than the network devices 101 to 103, and another device (for example, an access device configured to connect the end-side device to the communication network 100) may be further connected between the end-side device and the communication network 100. The application scenario may further include a control device to perform service control. The control device is connected to at least one end-side device and/or at least one network device. The control device may be a controller or a third-party network element. The control device may integrate functions such as network management, service control, and network analysis. The controller is a functional module deployed in a server, or a server, or a server cluster including servers, or a cloud computing service center, or another device or module having a network control function. This is not limited in this embodiment of this application.

The foregoing describes the application scenario of this application, and the following describes an embodiment of a congestion control method in this application.

FIG. 2 is a flowchart of a congestion control method according to an embodiment of this application. The congestion control method is applied to a first device in a congestion control system. The first device is a transmit-end device or a network device. For example, the congestion control system is shown in FIG. 1. The first device is the transmit-end device 201, or the first device is any one of the network devices 101 to 103. As shown in FIG. 2, the congestion control method includes step S201 to step S203 below.

S201: The first device obtains a first packet. The first packet includes congestion detection indication information and a congestion information field. The congestion detection indication information indicates a device to obtain congestion information corresponding to the device, and the congestion information field is used to carry the congestion information.

In this embodiment of this application, the congestion information includes at least one of first congestion information and second congestion information. The first congestion information is congestion information that needs to be updated after determining performed by the device. The second congestion information is congestion information that can be updated without determining performed by the device. For example, the first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet, and the accumulated processing delay is an accumulated value of a processing delay of the first packet in the device on the transmission path of the first packet.

Each device on the transmission path of the first packet includes a queue that is used to buffer the first packet. Utilization of a queue that is used to buffer the first packet in any device may be a percentage of a data volume buffered in the queue in a total data volume (that is, a total capacity) that can be buffered in the queue, or a percentage of a quantity of packets buffered in the queue in a total quantity of packets that can be buffered in the queue, or a percentage of a size of used space of the queue in a size of total space of the queue.

Each device on the transmission path of the first packet includes an interface that is configured to send the first packet. Utilization of an interface that is configured to send the first packet and that is in any device includes at least one of bandwidth utilization of the interface and link utilization of the interface. The link utilization rate of the interface is utilization in consideration of a bandwidth of the interface and buffer space of the interface. The bandwidth utilization rate of the interface that is configured to send the first packet and that is in any device is a percentage of a used bandwidth of the interface in a period of time (for example, a time period from a moment t1 to a moment t2) in a total bandwidth of the interface. The link utilization rate of the interface that is configured to send the first packet and that is in any device is determined based on a volume of data sent by the interface in a period of time (for example, the time period from the moment t1 to the moment t2), a used amount of the buffer space of the interface at a current moment (that is, a size of the used buffer space), and the bandwidth of the interface. For example, the link utilization rate of any interface is determined by using a formula LR=Qlen/(B*T)+[(D2-D1)/(t2-t1)]/B, where LR represents the link utilization rate of the interface, Qlen represents the used amount of the buffer space of the interface at the current moment, B represents the bandwidth of the interface, T represents an ideal transmission delay of an end-to-end path (that is, a transmission delay of the packet from the transmit-end device to the receive-end device when no congestion occurs), T is usually a constant, D2 represents an accumulated volume of data sent by the interface till the moment t2, and D1 represents an accumulated volume of data sent by the interface till the moment t1. Herein, D2-D1 represents an accumulated volume of data sent by the interface in the time period from the moment t1 to the moment t2, and (D2-D1)/(t2-t1) represents an average sending rate of the interface in the time period from the moment t1 to the moment t2. In some embodiments, the link utilization rate of the interface is also referred to as an inflight (inflight) utilization rate of the interface.

The accumulated congestion hop count on the transmission path of the first packet is a sum of congestion hop counts on the transmission path. Each device on the transmission path corresponds to one accumulated congestion hop count. An accumulated congestion hop count corresponding to any device on the transmission path is an accumulated congestion hop count to the device on the transmission path.

The accumulated processing delay of the first packet is an accumulated value of a processing delay of the first packet in the device on the transmission path of the first packet. In an example, a processing delay of the first packet in any device is a queuing delay of the first packet in the device (that is, a duration for which the first packet stays in a queue that is used to buffer the first packet and that is in the device). The accumulated processing delay of the first packet is an accumulated value of a queuing delay of the first packet in the device on the transmission path of the first packet. The accumulated processing delay is also an accumulated queuing delay. In another example, a processing delay of the first packet in any device includes a queuing delay of the first packet in the device and a sending delay of the first packet in the device (that is, a sending delay of the first packet at an interface that is configured to send the first packet and that is in the device). Each device on the transmission path of the first packet corresponds to one accumulated processing delay. The accumulated processing delay corresponding to any device on the transmission path is an accumulated value of a processing delay of the first packet in the device before the device and a processing delay of the first packet in the device. The accumulated processing delay of the first packet accumulates hop by hop.

In this embodiment of this application, the first packet includes the congestion detection indication information and the congestion information field. The congestion detection indication information indicates the device to obtain the congestion information corresponding to the device, and the congestion information field is used to carry the congestion information. In an embodiment, the first packet includes an advanced explicit congestion notification (advanced explicit congestion notification, AECN) header, and the AECN header includes the congestion detection indication information and the congestion information field. For example, the AECN header includes a congestion detection indication field and the congestion information field. The congestion detection indication information is in the congestion detection indication field. The AECN header may be an independent packet header, or may be an extended packet header in another packet header. In an example, the first packet includes an internet protocol version 6 (internet protocol version 6, IPv6) extension header, the AECN header is in the IPv6 extension header, and the AECN header is an extended packet header in the IPv6 extension header. For example, the AECN header is an extended option (option) field in the IPv6 extension header. In another example, the first packet includes an internet control message protocol (internet control message protocol, ICMP) header, the AECN header is in the ICMP header, and the AECN header is an extended packet header in the ICMP header. For example, the AECN header is an extended option field in the ICMP header.

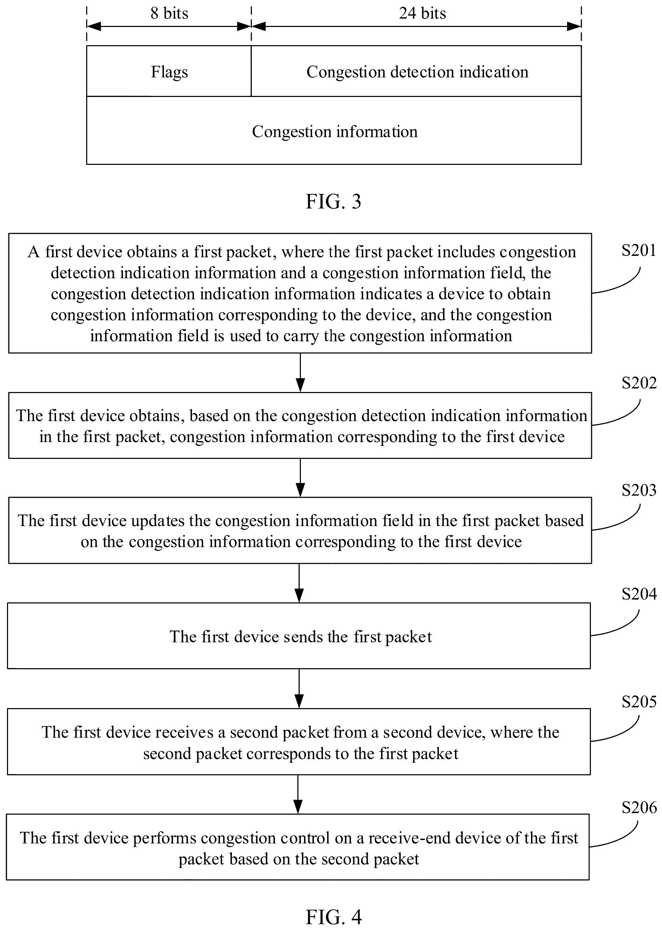

In this embodiment of this application, the AECN header includes the congestion detection indication field and the congestion information field, and may further include another field. This is not limited in this embodiment of this application. For example, FIG. 3 is a diagram of an AECN header according to an embodiment of this application. The AECN header includes a flags (flags) field, a congestion detection indication field, and a congestion information field. A length of the flags field is 8 bits, a length of the congestion detection indication field is 24 bits, and a length of the congestion information field may be an integer multiple of 32 bits. The flags field indicates a private congestion information type, to support a private algorithm of a communication network (for example, a data center network). For example, the 1^{st} bit (for example, the 1^{st} bit in 8 bits arranged in a sequence from low to high) in the flags field indicates the private congestion information type, and other bits are reserved. In a scenario in which private congestion information does not need to be detected, the 1^{st} bit is also reserved (that is, the flags field may be all reserved). The congestion detection indication field is used to carry the congestion detection indication information, to indicate the device on the path of the first packet to obtain the congestion information corresponding to the device. The congestion information field is used to carry the congestion information.

It can be learned from the foregoing description that there may be a plurality of types of congestion information in this embodiment of this application (for example, the utilization rate of the queue that is used to buffer the first packet and that is in the device, the bandwidth utilization rate of the interface that is configured to send the first packet and that is in the device, the link utilization rate of the interface that is configured to send the first packet and that is in the device, the accumulated congestion hop count on the transmission path of the first packet, and the accumulated processing delay of the first packet each are a type of congestion information). The congestion detection indication information carried in the congestion detection indication field indicates the device on the path of the first packet to obtain at least one of the plurality of types of congestion information, and the congestion information field is used to carry at least one of the plurality of types of congestion information. In an optional embodiment, the congestion detection indication field includes a plurality of detection flag subfields, the plurality of detection flag subfields are in a one-to-one correspondence with the plurality of types of congestion information, and each detection flag subfield is used to carry one type of congestion detection indication information, to indicate the device on the path of the first packet to obtain congestion information corresponding to each detection flag subfield. The congestion information field includes at least one congestion information subfield. The at least one congestion information subfield is in a one-to-one correspondence with at least one of the plurality of detection flag subfields. Each congestion information subfield is used to carry congestion information corresponding to a corresponding detection flag subfield. A quantity of the plurality of congestion information subfields is not greater than a quantity of the plurality of detection flag subfields.

In an embodiment, the plurality of detection flag subfields are a plurality of detection flag bits. A value of each detection flag bit is 0 or 1. "1" indicates the device on the path of the first packet to obtain the congestion information corresponding to each detection flag bit, and "0" indicates the device on the path of the first packet not to obtain the congestion information corresponding to each detection flag bit. A value "1" in each detection flag bit is the congestion detection indication information carried in each detection flag bit. The congestion detection indication field includes at least one congestion information subfield in a one-to-one correspondence with at least one of the plurality of detection flag bits. The at least one detection flag bit is a detection flag bit whose value is 1 in the plurality of detection flag bits. In an optional embodiment, the plurality of detection flag bits include a first detection flag bit to a fifth detection flag bit (that is, the first detection flag bit, the second detection flag bit, the third detection flag bit, the fourth detection flag bit, and the fifth detection flag bit). The first detection flag bit corresponds to the utilization rate of the queue that is used to buffer the first packet and that is in the device, the second detection flag bit corresponds to the bandwidth utilization rate of the interface that is configured to send the first packet and that is in the device, the third detection flag bit corresponds to the accumulated congestion hop count on the transmission path of the first packet, the fourth detection flag bit corresponds to the accumulated processing delay of the first packet, and the fifth detection flag bit corresponds to the link utilization rate of the interface that is configured to send the first packet and that is in the device. If a value of the first detection flag bit is "1", the first detection flag bit indicates the device on the path of the first packet to obtain the utilization rate of the queue that is used to buffer the first packet and that is in the device. If a value of the first detection flag bit is "0", the first detection flag bit indicates the device on the path of the first packet not to obtain the utilization rate of the queue that is used to buffer the first packet and that is in the device. If a value of the second detection flag bit is "1", the second detection flag bit indicates the device on the path of the first packet to obtain the bandwidth utilization rate of the interface that is configured to send the first packet and that is in the device. If a value of the second detection flag bit is "0", the second detection flag bit indicates the device on the path of the first packet not to obtain the bandwidth utilization rate of the interface that is configured to send the first packet and that is in the device. If a value of the third detection flag bit is "1", the third detection flag bit indicates the device on the path of the first packet to obtain the accumulated congestion hop count on the transmission path of the first packet. If a value of the third detection flag bit is "0", the third detection flag bit indicates the device on the path of the first packet not to obtain the accumulated congestion hop count on the transmission path of the first packet. If a value of the fourth detection flag bit is "1", the fourth detection flag bit indicates the device on the path of the first packet to obtain the accumulated processing delay of the first packet. If a value of the fourth detection flag bit is "0", the fourth detection flag bit indicates the device on the path of the first packet not to obtain the accumulated processing delay of the first packet. If a value of the fifth detection flag bit is "1", the fifth detection flag bit indicates the device on the path of the first packet to obtain the link utilization rate of the interface that is configured to send the first packet and that is in the device. If a value of the fifth detection flag bit is "0", the fifth detection flag bit indicates the device on the path of the first packet not to obtain the link utilization rate of the interface that is configured to send the first packet and that is in the device. In an example, if the values of the first detection flag bit to the fifth detection flag bit are all 1, the congestion information field includes a first congestion information subfield to a fifth congestion information subfield (that is, the first congestion information subfield, the second congestion information subfield, the third congestion information subfield, the fourth congestion information subfield, and the fifth congestion information subfield) in a one-to-one correspondence with the first detection flag bit to the fifth detection flag bit. The first congestion information subfield is used to carry the utilization rate of the queue that is used to buffer the first packet and that is in the device, the second congestion information subfield is used to carry the bandwidth utilization rate of the interface that is configured to send the first packet and that is in the device, the third congestion information subfield is used to carry the accumulated congestion hop count on the transmission path of the first packet, the fourth congestion information subfield is used to carry the accumulated processing delay of the first packet, and the fifth congestion information subfield is used to carry the link utilization rate of the interface that is configured to send the first packet and that is in the device. In another example, the values of the first detection flag bit, the fourth detection flag bit, and the fifth detection flag bit are all 1, and the values of the second detection flag bit and the third detection flag bit are all 0. In this case, the congestion information field includes a first congestion information subfield corresponding to the first detection flag bit, a fourth congestion information subfield corresponding to the fourth detection flag bit, and a fifth congestion information subfield corresponding to the fifth detection flag bit. The first congestion information subfield is used to carry the utilization rate of the queue that is used to buffer the first packet and that is in the device, the fourth congestion information subfield is used to carry the accumulated processing delay of the first packet, and the fifth congestion information subfield is used to carry the link utilization rate of the interface that is configured to send the first packet and that is in the device. For example, the plurality of detection flag bits are arranged in a sequence from low to high. In the plurality of detection flag bits that arranged in the sequence from low to high, the 1^{st} detection flag bit is the first detection flag bit, the 2^{nd} detection flag bit is the second detection flag bit, the 3^{rd} detection flag bit is the third detection flag bit, the 4^{th} detection flag bit is the fourth detection flag bit, and the 5^{th} detection flag bit is the fifth detection flag bit.

In actual application, information that can be carried in the AECN header may be customized according to a template, so that the device on the path of the packet collects different congestion information in different network scenarios according to different congestion control algorithms. For example, the information that can be carried in the AECN header is customized by setting a value of each detection flag subfield (for example, a detection flag bit) in the congestion detection indication field. For example, if the AECN header needs to be customized to carry the utilization rate of the queue that is used to buffer the packet and that is in the device, the value of the first detection flag bit is set to 1. If the AECN header needs to be customized to carry the bandwidth utilization rate of the interface that is configured to send the packet and that is in the device, the value of the second detection flag bit is set to 1. If the AECN header needs to be customized to carry the accumulated congestion hop count, the value of the third detection flag bit is set to 1. If the AECN header needs to be customized to carry the accumulated processing delay, the value of the fourth detection flag bit is set to 1. If the AECN header needs to be customized to carry the link utilization rate of the interface that is configured to send the packet and that is in the device, the value of the fifth detection flag bit is set to 1.

This embodiment of this application is described by using an example in which the congestion information field includes a congestion information subfield corresponding to a detection flag bit whose value is 1. In some embodiments, a quantity of congestion information subfields included in the congestion information field is equal to a quantity of detection flag subfields (for example, a detection flag bit) included in the congestion detection indication field, and the congestion information field includes the congestion information subfield corresponding to the detection flag bit whose value is 1 and a congestion information subfield corresponding to a detection flag bit whose value is 0. This is not limited in this embodiment of this application. In addition, in some embodiments, the congestion detection indication field is also referred to as a congestion information type (congestion information type) field, and the congestion information field is also referred to as a congestion information data (congestion information data) field.

In this embodiment of this application, the first packet is a service packet (for example, a service packet of a first service flow), a probe packet, or a copied packet of a service packet, the copied packet is a packet obtained by copying the service packet, and the copied packet is the same as the service packet. The first device is a transmit-end device or a network device on the transmission path of the first packet. In an embodiment in which the first device is a network device, the first device may be a network device directly connected to the transmit-end device, or may not be a network device directly connected to the transmit-end device (that is, another network device exists between the first device and the transmit-end device). An implementation in which the first device obtains the first packet varies with the first device. The following describes an implementation in which the first device obtains the first packet in three embodiments.

**First embodiment:** The first device is a transmit-end device, and the first device generates the first packet.

In the first embodiment, the first device (that is, the transmit-end device) may be a head node device configured to perform congestion detection.

In a first example, the first device encapsulates the congestion detection indication information and the congestion information field (for example, encapsulates the AECN header) into an original packet A of the first service flow, to obtain the first packet.

In a second example, the first device constructs a probe packet based on the original packet A of the first service flow, and the first device encapsulates the congestion detection indication information and the congestion information field (for example, encapsulates the AECN header) into the probe packet, to obtain the first packet.

In a third example, the first device copies the original packet A of the first service flow to obtain a copied packet A1, and the first device encapsulates the congestion detection indication information and the congestion information field (for example, encapsulates the AECN header) into the copied packet A1, to obtain the first packet.

The original packet A may be a service packet of the first service flow. Therefore, the first packet in the first example is a service packet, the first packet in the second example is a probe packet, the first packet in the third example may be a copied packet of a service packet. The probe packet may be an ICMP packet. This is not limited in this embodiment of this application.

**Second embodiment:** The first device is a network device, and the first device receives the first packet from a transmit-end device.

In the second embodiment, the first device is any network device on the path of the first packet, and the first device may be a network device directly connected to the transmit-end device, or may not be a network device directly connected to the transmit-end device. The first packet is generated by the transmit-end device. The transmit-end device sends the first packet after generating the first packet. The network device receives the first packet. For an implementation process in which the transmit-end device generates the first packet, refer to the first embodiment above. Details are not described herein again. The transmit-end device may be a head node device configured to perform congestion detection.

**Third embodiment:** The first device is a network device, the first device receives an original packet from a transmit-end device, and the first device generates the first packet based on the original packet.

In the third embodiment, the first device (that is, the network device) may be a head node device configured to perform congestion detection. The first device is a network device directly connected to the transmit-end device (or may not be a network device directly connected to the transmit-end device). The original packet may be a service packet, a probe packet, or a copied packet of a service packet. For example, the original packet is a service packet (for example, the foregoing original packet A) of the first service flow, or is a probe packet constructed by the transmit-end device based on the service packet of the first service flow, or is a copied packet obtained by the transmit-end device by copying the service packet of the first service flow.

In a first example, the first device constructs the first packet based on the original packet from the transmit-end device. For example, the original packet is a service packet, the first device constructs a probe packet based on the original packet, and the first device encapsulates the congestion detection indication information and the congestion information field (for example, encapsulates the AECN header) into the probe packet, to obtain the first packet, where the first packet is a probe packet.

In a second example, the first device encapsulates the congestion detection indication information and the congestion information field (for example, encapsulates the AECN header) into the original packet from the transmit-end device, to obtain the first packet. The original packet is a service packet or a probe packet, and the first packet may be a service packet or a probe packet. The probe packet may be an ICMP packet.

In a third example, the first device copies the original packet from the transmit-end device to obtain a copied packet, and the first device encapsulates the congestion detection indication information and the congestion information field (for example, encapsulates the AECN header) into the copied packet, to obtain the first packet. The original packet is a service packet or a probe packet, and the first packet is a service packet, a probe packet, or a copied packet.

S202: The first device obtains, based on the congestion detection indication information in the first packet, congestion information corresponding to the first device.

In this embodiment of this application, the congestion information includes at least one of the first congestion information and the second congestion information. Therefore, the first device obtains, based on the congestion detection indication information in the first packet, first congestion information and/or second congestion information corresponding to the first device. In two embodiments, the following describes an implementation process in which the first device obtains the congestion information corresponding to the first device.

**First embodiment:** The congestion detection indication information in the first packet indicates the device to obtain the first congestion information corresponding to the device, and the first device obtains, based on the congestion detection indication information, the first congestion information corresponding to the first device.

The first congestion information includes at least one of the following: the utilization rate of the queue that is used to buffer the first packet and that is in the device, the bandwidth utilization rate of the interface that is configured to send the first packet and that is in the device, the link utilization rate of the interface that is configured to send the first packet and that is in the device, and the accumulated congestion hop count on the transmission path of the first packet. Therefore, in the first embodiment, the first device obtains, based on the congestion detection indication information in the first packet, at least one piece of the congestion information corresponding to the first device: the utilization rate of the queue that is used to buffer the first packet and that is in the first device, the bandwidth utilization rate of the interface that is configured to send the first packet and that is in the first device, the link utilization rate of the interface that is configured to send the first packet and that is in the first device, and the accumulated congestion hop count corresponding to the first device. The accumulated congestion hop count corresponding to the first device is an accumulated congestion hop count to the first device on the transmission path of the first packet.

**Second embodiment:** The congestion detection indication information in the first packet indicates the device to obtain the second congestion information corresponding to the device, and the first device obtains, based on the congestion detection indication information, the second congestion information corresponding to the first device.

The second congestion information includes the accumulated processing delay of the first packet. Therefore, the first device obtains, based on the congestion detection indication information in the first packet, the accumulated processing delay corresponding to the first device. The accumulated processing delay corresponding to the first device is an accumulated value of a processing delay of the first packet in the first device and a processing delay of the first packet in a device before the first device.

In this embodiment of this application, there may be a plurality of types of congestion information (for example, the utilization rate of the queue that is used to buffer the first packet and that is in the device, the bandwidth utilization rate of the interface that is configured to send the first packet and that is in the device, the link utilization rate of the interface that is configured to send the first packet and that is in the device, the accumulated congestion hop count on the transmission path of the first packet, and the accumulated processing delay of the first packet each are a type of congestion information). The plurality of pieces of congestion information include the first congestion information and the second congestion information. The congestion detection indication information in the first packet indicates the first device to obtain at least one of the plurality of types of congestion information. The first device obtains, based on the congestion detection indication information, at least one type of congestion information corresponding to the first device. Optionally, the first packet includes the AECN header. The AECN header includes the congestion detection indication field that is used to carry the congestion detection indication information. The congestion detection indication field includes the plurality of detection flag subfields. The plurality of detection flag subfields are in the one-to-one correspondence with the plurality of types of congestion information. Each detection flag subfield is used to carry one type of congestion detection indication information, to indicate the device on the path of the first packet to obtain the congestion information corresponding to each detection flag subfield. The first device obtains at least one of the plurality of types of congestion information based on the plurality of detection flag subfields.

In an embodiment, the plurality of detection flag subfields are a plurality of detection flag bits. The first device determines a detection flag bit whose value is 1 in the plurality of detection flag bits. The first device obtains congestion information corresponding to the detection flag bit whose value is 1. Optionally, the plurality of detection flag bits include the first detection flag bit to the fifth detection flag bit. The first detection flag bit corresponds to the utilization rate of the queue that is used to buffer the first packet and that is in the device, the second detection flag bit corresponds to the bandwidth utilization rate of the interface that is configured to send the first packet and that is in the device, the third detection flag bit corresponds to the accumulated congestion hop count on the transmission path of the first packet, the fourth detection flag bit corresponds to the accumulated processing delay of the first packet, and the fifth detection flag bit corresponds to the link utilization rate of the interface that is configured to send the first packet and that is in the device. If the value of the first detection flag bit is "1", the first device obtains the utilization rate of the queue that is used to buffer the first packet and that is in the first device. If the value of the first detection flag bit is "0", the first device does not obtain the utilization rate of the queue that is used to buffer the first packet and that is in the first device. If the value of the second detection flag bit is "1", the first device obtains the bandwidth utilization rate of the interface that is configured to send the first packet and that is in the first device. If the value of the second detection flag bit is "0", the first device does not obtain the bandwidth utilization rate of the interface that is configured to send the first packet and that is in the first device. If the value of the third detection flag bit is "1", the first device obtains the accumulated congestion hop count on the transmission path of the first packet (that is, the accumulated congestion hop count corresponding to the first device, where the accumulated congestion hop count corresponding to the first device is the accumulated congestion hop count to the first device on the transmission path of the first packet). If the value of the third detection flag bit is "0", the first device does not obtain the accumulated congestion hop count on the transmission path of the first packet. If the value of the fourth detection flag bit is "1", the first device obtains the accumulated processing delay of the first packet (that is, the accumulated processing delay corresponding to the first device, where the accumulated processing delay corresponding to the first device is the accumulated value of the processing delay of the first packet in the first device and the processing delay of the first packet in the device before the first device). If the value of the fourth detection flag bit is "0", the first device does not obtain the accumulated processing delay of the first packet. If the value of the fifth detection flag bit is "1", the first device obtains the link utilization rate of the interface that is configured to send the first packet and that is in the first device. If the value of the fifth detection flag bit is "0", the first device does not obtain the link utilization rate of the interface that is configured to send the first packet and that is in the first device. In an example, if the values of the first detection flag bit to the fifth detection flag bit are all 1, the first device obtains the following congestion information corresponding to the first device: the utilization rate of the queue that is used to buffer the first packet and that is in the first device, the bandwidth utilization rate of the interface that is configured to send the first packet and that is in the first device, the accumulated congestion hop count on the transmission path of the first packet (that is, the accumulated congestion hop count corresponding to the first device), the accumulated processing delay of the first packet (that is, the accumulated processing delay corresponding to the first device), and the link utilization rate of the interface that is configured to send the first packet and that is in the first device. In another example, if the values of the first detection flag bit, the fourth detection flag bit, and the fifth detection flag bit are all 1, and the values of the second detection flag bit and the third detection flag bit are all 0, the first device obtains the following congestion information corresponding to the first device: the utilization rate of the queue that is used to buffer the first packet and that is in the first device, the accumulated processing delay of the first packet (that is, the accumulated processing delay corresponding to the first device), and the link utilization rate of the interface that is configured to send the first packet and that is in the first device.

In an embodiment, the value of the second detection flag bit is "1", and the first device obtains, by using a discounting rate estimator (discounting rate estimator, DRE) algorithm, the bandwidth utilization rate of the interface that is configured to send the first packet and that is in the first device. In another embodiment, the value of the third detection flag bit is "1", and the first device detects whether congestion occurs on the interface that is configured to send the first packet and that is in the first device. If congestion occurs on the interface that is configured to send the first packet and that is in the first device, the first device determines that congestion occurs on the first device, and the first device adds 1 to the accumulated congestion hop count in the congestion information field in the first packet to obtain the accumulated congestion hop count corresponding to the first device. In still another embodiment, the value of the fourth detection flag bit is "1". The first device obtains the processing delay of the first packet in the first device. The first device adds the processing delay of the first packet in the first device to the accumulated processing delay in the congestion information field of the first packet, to obtain the accumulated processing delay corresponding to the first device.

S203: The first device updates the congestion information field in the first packet based on the congestion information corresponding to the first device.

That the first device updates the congestion information field in the first packet is that the first device updates the congestion information in the congestion information field. In this embodiment of this application, the congestion information includes at least one of the first congestion information and the second congestion information. Therefore, the first device updates the first congestion information and/or the second congestion information in the congestion information field based on the congestion information corresponding to the first device. In two embodiments, the following describes an implementation process in which the first device updates the congestion information field in the first packet.

**First embodiment (corresponding to the first embodiment in** S202): When a relationship between the first congestion information corresponding to the first device and the first congestion information in the congestion information field meets a preset condition, the first device updates the first congestion information in the congestion information field based on the first congestion information corresponding to the first device. For example, the first device replaces the first congestion information in the congestion information field with the first congestion information corresponding to the first device. The preset condition includes any one of the following: a value of the first congestion information corresponding to the first device is greater than a value of the first congestion information in the congestion information field; or a value of the first congestion information corresponding to the first device is less than or equal to a value of the first congestion information in the congestion information field.

Optionally, the first device determines whether the first congestion information corresponding to the first device and the first congestion information in the congestion information field meet the preset condition. When the relationship between the first congestion information corresponding to the first device and the first congestion information in the congestion information field meets the preset condition, the first device updates the first congestion information in the congestion information field based on the first congestion information corresponding to the first device. When the relationship between the first congestion information corresponding to the first device and the first congestion information in the congestion information field does not meet the preset condition, the first device does not update the first congestion information in the congestion information field based on the first congestion information corresponding to the first device. It should be noted that there may be a plurality of types of first congestion information. When the first device determines whether the first congestion information corresponding to the first device and the first congestion information in the congestion information field meet the preset condition, the first device performs determining on a same type (category) of congestion information. The following is described by using an example in which the preset condition is that the value of the first congestion information corresponding to the first device is greater than the value of the first congestion information in the congestion information field.

In an example, the first congestion information corresponding to the first device includes the utilization rate of the queue that is used to buffer the first packet and that is in the first device. The congestion information field includes a queue utilization rate. The queue utilization rate in the congestion information field is an initial utilization rate or utilization of a queue that is used to buffer the first packet and that is in a specific device before the first device on the transmission path of the first packet. The initial queue utilization rate may be an initial value of a queue utilization rate that is set by a device generating the first packet. The initial utilization rate is usually 0. The first device determines whether the utilization rate of the queue that is used to buffer the first packet and that is in the first device is greater than the queue utilization rate in the congestion information field. When the utilization rate of the queue that is used to buffer the first packet and that is in the first device is greater than the queue utilization rate in the congestion information field, the first device updates the queue utilization rate in the congestion information field based on the utilization rate of the queue that is used to buffer the first packet and that is in the first device. For example, the first device replaces the queue utilization rate in the congestion information field with the utilization rate of the queue that is used to buffer the first packet and that is in the first device. When the utilization rate of the queue that is used to buffer the first packet and that is in the first device is not greater than the queue utilization rate in the congestion information field, the first device does not update the queue utilization rate in the congestion information field based on the utilization rate of the queue that is used to buffer the first packet and that is in the first device.

In another example, the first congestion information corresponding to the first device includes the bandwidth utilization rate of the interface that is configured to send the first packet and that is in the first device. The congestion information field includes bandwidth utilization. The bandwidth utilization rate in the congestion information field is an initial utilization rate or bandwidth utilization of an interface that is configured to send the first packet and that is in a specific device before the first device on the transmission path of the first packet. The initial utilization rate may be an initial value of bandwidth utilization that is set by a device generating the first packet. The initial utilization rate is usually 0. The first device determines whether the bandwidth utilization rate of the interface that is configured to send the first packet and that is in the first device is greater than the bandwidth utilization rate in the congestion information field. When the bandwidth utilization rate of the interface that is configured to send the first packet and that is in the first device is greater than the bandwidth utilization rate in the congestion information field, the first device updates the bandwidth utilization rate in the congestion information field based on the bandwidth utilization rate of the interface that is configured to send the first packet and that is in the first device, for example, replaces the bandwidth utilization rate in the congestion information field with the bandwidth utilization rate of the interface that is configured to send the first packet and that is in the first device. When the bandwidth utilization rate of the interface that is configured to send the first packet and that is in the first device is not greater than the bandwidth utilization rate in the congestion information field, the first device does not update the bandwidth utilization rate in the congestion information field based on the bandwidth utilization rate of the interface that is configured to send the first packet and that is in the first device.

In still another example, the first congestion information corresponding to the first device includes the accumulated congestion hop count. The accumulated congestion hop count corresponding to the first device is the accumulated congestion hop count to the first device on the transmission path of the first packet. The congestion information field includes the accumulated congestion hop count. The accumulated congestion hop count in the congestion information field is an initial congestion hop count or an accumulated congestion hop count corresponding to a specific device that is located before the first device and that is on the transmission path of the first packet. The initial congestion hop count may be an initial value of a congestion hop count that is set by a device generating the first packet. The initial congestion hop count is usually 0. The first device determines whether the accumulated congestion hop count corresponding to the first device is greater than the accumulated congestion hop count in the congestion information field. When the accumulated congestion hop count corresponding to the first device is greater than the accumulated congestion hop count in the congestion information field, the first device updates the accumulated congestion hop count in the congestion information field based on the accumulated congestion hop count corresponding to the first device. For example, the first device replaces the accumulated congestion hop count in the congestion information field with the accumulated congestion hop count corresponding to the first device, or the first device adds 1 to the accumulated congestion hop count in the congestion information field. When the accumulated congestion hop count corresponding to the first device is not greater than the accumulated congestion hop count in the congestion information field, the first device does not update the accumulated congestion hop count in the congestion information field based on the accumulated congestion hop count corresponding to the first device.

In yet another example, the first congestion information corresponding to the first device includes the link utilization rate of the interface that is configured to send the first packet and that is in the first device. The congestion information field includes link utilization. The link utilization rate in the congestion information field is an initial utilization rate or link utilization of an interface that is configured to send the first packet and that is in a specific device before the first device on the transmission path of the first packet. The initial utilization rate may be an initial value of link utilization that is set by a device generating the first packet. The initial utilization rate is usually 0. The first device determines whether the link utilization rate of the interface that is configured to send the first packet and that is in the first device is greater than the link utilization rate in the congestion information field. When the link utilization rate of the interface that is configured to send the first packet and that is in the first device is greater than the link utilization rate in the congestion information field, the first device updates the link utilization rate in the congestion information field based on the link utilization rate of the interface that is configured to send the first packet and that is in the first device, for example, replaces the link utilization rate in the congestion information field with the link utilization rate of the interface that is configured to send the first packet and that is in the first device. When the link utilization rate of the interface that is configured to send the first packet and that is in the first device is not greater than the link utilization rate in the congestion information field, the first device does not update the link utilization rate in the congestion information field based on the link utilization rate of the interface that is configured to send the first packet and that is in the first device.

**Second embodiment (corresponding to the second embodiment in S202):** The first device updates the second congestion information in the congestion information field based on the second congestion information corresponding to the first device. For example, the first device replaces the second congestion information in the congestion information field with the second congestion information corresponding to the first device.

For example, the first congestion information corresponding to the first device includes the accumulated processing delay. The accumulated processing delay corresponding to the first device is the accumulated value of the processing delay of the first packet in the first device and the processing delay of the first packet in the device before the first device (for example, all devices before the first device). The congestion information field includes the accumulated processing delay. The accumulated processing delay in the congestion information field is an initial accumulated processing delay or an accumulated processing delay corresponding to a previous-hop device of the first device. The initial accumulated processing delay may be an initial value of an accumulated processing delay set by a device generating the first packet. The initial accumulated processing delay is usually 0. The first device replaces the accumulated processing delay in the congestion information field with the accumulated processing delay corresponding to the first device, to update the accumulated processing delay in the congestion information field.

In conclusion, in the technical solutions provided in this embodiment of this application, the congestion detection indication information and the congestion information field are set in the first packet. The congestion detection indication information indicates the device to obtain the congestion information corresponding to the device. The congestion information field is used to carry the congestion information. In this case, the device on the path of the first packet obtains, based on the congestion detection indication information, the congestion information corresponding to the device, and updates the congestion information field based on the congestion information corresponding to the device. The congestion information field can carry a large amount of congestion information. This helps an end-side device perform accurate congestion control based on the congestion information carried in the congestion information field.

In an optional embodiment, still with reference to FIG. 2, after S203, the method further includes step S204 below.

S204: The first device sends the first packet.

The first device sends the first packet through the interface that is configured to send the first packet and that is in the first device.

In an optional embodiment, the first device is a transmit-end device. FIG. 4 is a flowchart of another congestion control method according to an embodiment of this application. After S204, the method further includes steps S205 and S206 below.

S205: The first device receives a second packet from a second device. The second packet corresponds to the first packet.

The second device is a receive-end device of the first packet, or the second device is a network device between the first device and the receive-end device. The network device may be directly connected to the receive-end device.

In this embodiment of this application, the device on the path of the first packet obtains, based on the congestion detection indication information in the first packet, the congestion information corresponding to the device, updates the congestion information in the congestion information field in the first packet based on the congestion information corresponding to the device, and sends the first packet. After the second device receives the first packet, the second device sends the second packet to the transmit-end device based on the congestion information field in the first packet, to indicate the transmit-end device to perform congestion control on the receive-end device of the first packet. The first device serving as the transmit-end device receives the second packet from the second device. The second packet is a probe packet or an ACK packet of a transport layer. For example, the first packet is a service packet or a copied packet of a service packet, and the second packet is an ACK packet of a transport layer. For another example, the first packet is a probe packet, and the second packet is a probe packet.

In this embodiment of this application, the second packet includes at least one of the congestion information in the congestion information field and a congestion control instruction, to indicate the transmit-end device to perform congestion control on the receive-end device of the first packet. The congestion control instruction is determined by the second device based on congestion information in the congestion information field. The congestion control instruction indicates the transmit-end device to perform congestion control on the receive-end device. The congestion control instruction may further indicate a congestion control policy (that is, how to perform congestion control). Optionally, the second device determines, based on the congestion information in the congestion information field in the first packet received by the second device, whether congestion occurs on the transmission path of the first packet (that is, determines whether congestion occurs on the first packet), and the second device generates the congestion control instruction based on whether congestion occurs on the transmission path of the first packet. For example, the second device determines whether the congestion information in the congestion information field in the first packet received by the second device meets a congestion condition. When the congestion information in the congestion information field meets the congestion condition, the second device determines that congestion occurs on the transmission path of the first packet. When the congestion information in the congestion information field does not meet the congestion condition, the second device determines that congestion occurs on the transmission path of the first packet. The congestion condition includes at least one of the following: the queue utilization rate in the congestion information field is greater than a first threshold; the bandwidth utilization rate in the congestion information field (that is, the bandwidth utilization rate of the interface) is greater than a second threshold; the link utilization rate in the congestion information field (that is, the link utilization rate of the interface, where the link utilization rate in the congestion information field in the first packet received by the second device (for example, the receive-end device) is link utilization of a bottleneck interface on the transmission path of the first packet) is greater than a third threshold; the accumulated congestion hop count in the congestion information field is greater than a preset hop count; and the accumulated processing delay in the congestion information field is greater than a preset delay. If the second device determines that the congestion information in the congestion information field meets at least one of the congestion conditions, the second device determines that congestion occurs on the transmission path of the first packet. The first threshold, the second threshold, the third threshold, the preset hop count, the preset delay, and the like are set based on an actual situation. For example, the preset hop count is 0. This is not limited in this embodiment of this application.

In an embodiment, the second device determines that congestion occurs on the transmission path of the first packet, and the second device generates the congestion control instruction. In an example, the congestion control instruction indicates the transmit-end device to reduce a send window, a sending rate, and the like that are used by the transmit-end device to send a packet to the receive-end device of the first packet (in other words, indicates reduction but does not indicate how to implement reduction). In another example, the congestion control instruction indicates the transmit-end device to reduce, through subtraction, a send window that is used by the transmit-end device to send a packet to the receive-end device of the first packet (in other words, indicates reduction and indicates how to implement reduction). In still another example, the congestion control instruction indicates the transmit-end device to reduce, through division, a send window that is used by the transmit-end device to send a packet to the receive-end device of the first packet (in other words, indicates reduction and indicates how to implement reduction). In yet another example, the congestion control instruction indicates the transmit-end device to first reduce, through division, a send window that is used by the transmit-end device to send a packet to the receive-end device of the first packet; and after a quantity of times of reducing the send window through division reaches a preset quantity of times, to reduce, through subtraction, the send window that is used by the transmit-end device to send a packet to the receive-end device (in other words, indicates reduction and indicates how to implement reduction).

In another embodiment, the second device determines that congestion does not occur on the transmission path of the first packet, and the second device generates the congestion control instruction. In an example, the congestion control instruction indicates the transmit-end device to increase a send window, a sending rate, and the like that are used by the transmit-end device to send a packet to the receive-end device of the first packet (in other words, indicates increase but does not indicate how to implement increase). In another example, the congestion control instruction indicates the transmit-end device to increase, through addition, a send window that is used by the transmit-end device to send a packet to the receive-end device of the first packet (in other words, indicates increase and indicates how to implement increase). In still another example, the congestion control instruction indicates the transmit-end device to increase, through multiplication, a send window that is used by the transmit-end device to send a packet to the receive-end device of the first packet (in other words, indicates increase and indicates how to implement increase). In yet another example, the congestion control instruction indicates the transmit-end device to first increase, through addition, a send window that is used by the transmit-end device to send a packet to the receive-end device of the first packet; and after a quantity of times of increasing the send window through addition reaches a preset quantity of times, to increase, through multiplication, the send window that is used by the transmit-end device to send a packet to the receive-end device (in other words, indicates increase and indicates how to implement increase).

In this embodiment of this application, description is provided by using an example in which the second device determines, based on the congestion information in the congestion information field in the first packet received by the second device, whether congestion occurs on the transmission path of the first packet. The second device may further determine a congestion degree or a congestion level on the transmission path based on the congestion information in the congestion information field. For example, a larger value of the congestion information in the congestion information field indicates a higher congestion degree and a higher congestion level on the transmission path. For example, the second device includes a mapping relationship between a value range of congestion information and a congestion degree (or a congestion level), and the second device determines the congestion degree or (the congestion level) on the transmission path based on the value of the congestion information in the congestion information field and the mapping relationship. Optionally, when generating the congestion control instruction, the second device may further consider the congestion degree or the congestion level on the transmission path. A larger congestion degree on the transmission path indicates a higher congestion level on the transmission path and a larger control degree of a congestion control policy indicated by the congestion control instruction generated by the second device (for example, a faster decrease of the send window and a faster decrease of the sending rate).

S206: The first device performs congestion control on the receive-end device of the first packet based on the second packet.

In this embodiment of this application, the second packet includes the congestion information in the congestion information field of the first packet and/or the congestion control instruction, and the first device performs congestion control on the receive-end device of the first packet based on the congestion information and/or the congestion control instruction.

In an embodiment, the second packet includes the congestion control instruction. The congestion control instruction indicates the transmit-end device (that is, the first device) to perform congestion control on the receive-end device of the first packet and does not indicate the congestion control policy. The first device performs congestion control on the receive-end device based on the congestion control instruction with reference to a local congestion control algorithm. For example, the first device determines the congestion control policy based on the congestion control instruction with reference to the local congestion control algorithm, and the first device executes the congestion control policy for the receive-end device to perform congestion control on the receive-end device.

In another embodiment, the second packet includes the congestion control instruction. The congestion control instruction indicates the transmit-end device (that is, the first device) to perform congestion control on the receive-end device of the first packet and indicates the congestion control policy. The first device executes, for the receive-end device, the congestion control policy indicated by the congestion control instruction, to perform congestion control on the receive-end device.

In still another embodiment, the second packet includes the congestion information in the congestion information field. The first device determines the congestion control instruction based on the congestion information in the second packet, and performs congestion control on the receive-end device of the first packet based on the congestion control instruction. For an implementation process in which the first device determines the congestion control instruction based on the congestion information, refer to an implementation process in which the second device determines the congestion control instruction based on the congestion information. Details are not described herein again.

In the technical solutions provided in this embodiment of this application, the device on the path of the first packet updates the congestion information in the congestion information field in the first packet hop by hop. The second device (for example, the receive-end device of the first packet) sends the second packet to the transmit-end device based on the congestion information in the congestion information field in the first packet received by the second device. The transmit-end device performs congestion control on the receive-end device of the first packet based on the second packet. Because the congestion information field may carry a large amount of congestion information, the transmit-end device can implement accurate congestion control. In addition, the link utilization rate in the congestion information field in the first packet received by the second device may be the link utilization rate of the bottleneck interface on the transmission path of the first packet. In the technical solutions provided in this embodiment of this application compared with the current HPCC technology, a process of calculating the link utilization rate of the bottleneck interface may be transferred from the end-side device (for example, the transmit-end device) to the network device, to avoid a resource waste caused by repeated calculation by the end-side device.

The current BBR congestion control technology cannot distinguish between a queuing delay and a link delay. As a result, the transmit-end device needs to perform continuous sawtooth seeking near a convergence point of the sending rate of the transmit-end device. In the technical solutions provided in this embodiment of this application, the accumulated processing delay of the first packet may be an accumulated queuing delay. The device on the path of the first packet may obtain an accumulated queuing delay corresponding to the device. An accumulated queuing delay corresponding to each device is an accumulated value of a queuing delay of the first packet in the device and a queuing delay of the first packet in a device before the device. The device on the path of the first packet updates an accumulated queuing delay in the congestion information field in the first packet hop by hop based on the accumulated queuing delay corresponding to the device. The accumulated queuing delay in the congestion information field may be provided by the second device for the transmit-end device. The transmit-end device may quickly determine, based on the accumulated queuing delay in the congestion information field, a convergence point of a sending rate that is used by the transmit-end device to send a packet to the receive-end device of the first packet, and determine the bottleneck bandwidth on the transmission path of the first packet. For example, the transmit-end device quickly determines, based on the accumulated queuing delay of the first packet, whether the sending rate that is used by the transmit-end device to send a packet to the receive-end device is excessively large and therefore causes an extra queuing delay, and adjusts, to the convergence point based on a determining result, the sending rate that is used by the transmit-end device to send a packet to the receive-end device. The transmit-end device does not need to continuously perform sawtooth seeking near the convergence point.

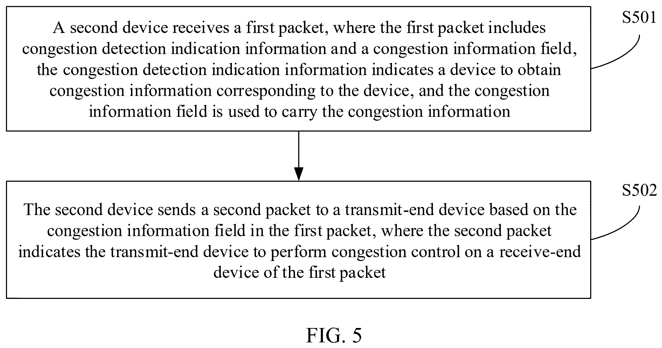

FIG. 5 is a flowchart of still another congestion control method according to an embodiment of this application. The congestion control method is applied to a second device in a congestion control system. The second device is a receive-end device or a network device. For example, the congestion control system is shown in FIG. 1. The second device is the receive-end device 202, or the second device is any one of the network devices 101 to 103. As shown in FIG. 5, the congestion control method includes step S501 and step S502 below.

S501: The second device receives a first packet. The first packet includes congestion detection indication information and a congestion information field. The congestion detection indication information indicates a device to obtain congestion information corresponding to the device, and the congestion information field is used to carry the congestion information.

The second device receives the first packet from a previous-hop device of the second device. For related descriptions of the first packet and the congestion information, refer to the related descriptions in S201. Details are not described herein again.

S502: The second device sends a second packet to a transmit-end device based on the congestion information field in the first packet. The second packet indicates the transmit-end device to perform congestion control on the receive-end device of the first packet.

The second device generates the second packet based on the congestion information in the congestion information field in the first packet, and sends the second packet to the transmit-end device, to indicate the transmit-end device to perform congestion control on the receive-end device of the first packet. The second packet is a probe packet or an ACK packet of a transport layer. The second packet includes the congestion information in the congestion information field and/or a congestion control instruction. The congestion control instruction is determined based on the congestion information in the congestion information field. Optionally, the second device generates the congestion control instruction based on the congestion information in the congestion information field, and the second device generates the second packet including the congestion control instruction. For example, the second device determines, based on the congestion information in the congestion information field, whether congestion occurs on a transmission path of the first packet, determines a congestion degree or a congestion level of the transmission path, and the like. The second device generates the congestion control instruction based on whether congestion occurs on the transmission path, the congestion degree or the congestion level of the transmission path, and the like. For an implementation process in which the second device generates the congestion control instruction, refer to related descriptions in S205. Details are not described herein again.

In conclusion, in the technical solutions provided in embodiments of this application, the congestion detection indication information and the congestion information field are set in the first packet. The congestion detection indication information indicates a device to obtain congestion information corresponding to the device. The congestion information field is used to carry the congestion information. In this case, a device on the path of the first packet may obtain, based on the congestion detection indication information, congestion information corresponding to the device, and updates the congestion information field based on the congestion information corresponding to the device. The second device sends the second packet to the transmit-end device based on the congestion information field. The transmit-end device performs congestion control on the receive-end device of the first packet. The congestion information field can carry a large amount of congestion information. Therefore, the second packet sent by the second device to the transmit-end device based on the congestion information field may indicate the transmit-end device to perform accurate congestion control.

It can be learned from the foregoing description that the first packet may be generated by the transmit-end device, or may be generated by a network device based on an original packet from the transmit-end device. In other words, a packet sent by the transmit-end device may include congestion detection indication information and a congestion information field (for example, include an AECN header); or a packet sent by the transmit-end device does not include congestion detection indication information and a congestion information field (for example, does not include an AECN header). The network device generates, based on the packet sent by the transmit-end device, the packet including the congestion detection indication information and the congestion information field (for example, generates the packet including the AECN header). In addition, the second device may be the receive-end device or the network device. The following describes the congestion control method in this application by using an example in which a packet sent by a transmit-end device includes congestion detection indication information and a congestion information field, and a second device is a receive-end device.

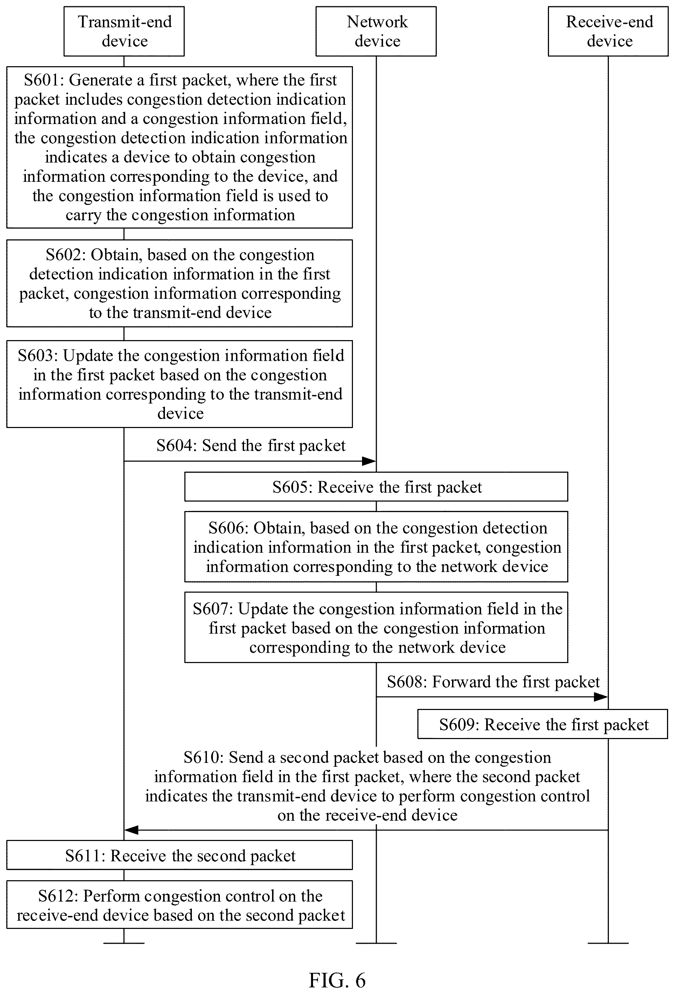

FIG. 6 is a flowchart of yet another congestion control method according to an embodiment of this application. The congestion control method is applied to a congestion control system including a transmit-end device, a receive-end device, and a network device. For example, the congestion control system is shown in FIG. 1. As shown in FIG. 6, the congestion control method includes step S601 to step S612 below.

S601: The transmit-end device generates a first packet. The first packet includes congestion detection indication information and a congestion information field. The congestion detection indication information indicates a device to obtain congestion information corresponding to the device, and the congestion information field is used to carry the congestion information.

S602: The transmit-end device obtains, based on the congestion detection indication information in the first packet, congestion information corresponding to the transmit-end device.

S603: The transmit-end device updates the congestion information field in the first packet based on the congestion information corresponding to the transmit-end device.

S604: The transmit-end device sends the first packet.

S605: The network device receives the first packet.

S606: The network device obtains, based on the congestion detection indication information in the first packet, congestion information corresponding to the network device.

S607: The network device updates the congestion information field in the first packet based on the congestion information corresponding to the network device.

S608: The network device forwards the first packet.

S609: The receive-end device receives the first packet.

S610: The receive-end device sends a second packet to the transmit-end device based on the congestion information field in the first packet. The second packet indicates the transmit-end device to perform congestion control on the receive-end device.

S611: The transmit-end device receives the second packet from the receive-end device.

S612: The transmit-end device performs congestion control on the receive-end device based on the second packet.

The network device in the embodiment shown in FIG. 6 may be any network device on a transmission path of the first packet. For an implementation process of S601, refer to the first embodiment in which the first device obtains the first packet in S201. For implementation processes of S602 to S604 and implementation processes of S606 to S608, refer to the implementation processes of S202 to S204. For an implementation process of S605, refer to the second embodiment in which the first device obtains the first packet in S201. For implementation processes of S609 and S610, refer to the implementation processes of S501 and S502. For implementation processes of S611 and S612, refer to the implementation processes of S205 and S206.

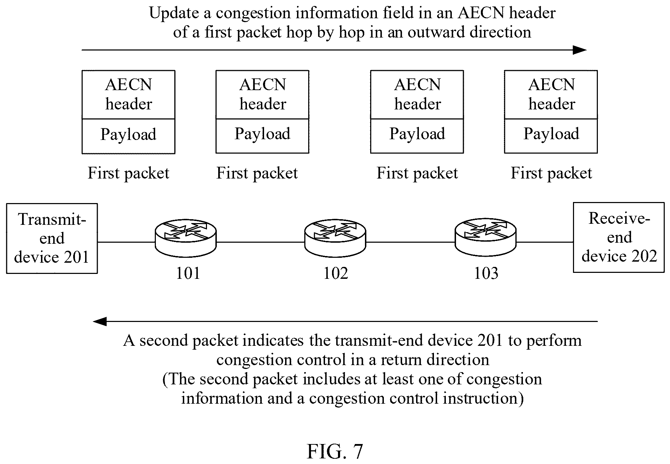

For example, FIG. 7 is a diagram of a congestion control method according to an embodiment of this application. FIG. 7 is described by using an example in which the congestion control method is applied to the congestion control system shown in FIG. 1, and the first packet is generated by the transmit-end device 201. As shown in FIG. 7, description is provided by using an example in which the first packet includes a payload (payload) and an AECN header, and the AECN header includes congestion detection indication information and a congestion information field (for brevity, the congestion detection indication information and the congestion information field are not shown in the AECN header in FIG. 7) A transmission path of the first packet is: the transmit-end device 201 -> the network device 101 -> the network device 102 -> the network device 103 -> the receive-end device 202. In a process in which the first packet is sent from the transmit-end device 201 to the receive-end device 202, the devices on the transmission path update the congestion information field in the AECN header of the first packet hop by hop (that is, update the congestion information in the congestion information field). After the receive-end device 202 receives the first packet, the receive-end device 202 sends a second packet to the transmit-end device 201 based on the first packet. The second packet includes at least one of the congestion information in the congestion information field and a congestion control instruction determined based on the congestion information. The second packet indicates the transmit-end device 201 to perform congestion control on the receive-end device 202. The transmit-end device 201 adjusts, based on the second packet, a send window, a sending rate, and the like that are used by the transmit-end device 201 to send a packet to the receive-end device 202, to perform congestion control on the receive-end device 202.

The following describes the congestion control method in this application by using an example in which a packet sent by a transmit-end device does not include congestion detection indication information and a congestion information field, a first network device generates, based on the packet sent by the transmit-end device, a packet including the congestion detection indication information and the congestion information field, and a second device is a receive-end device.

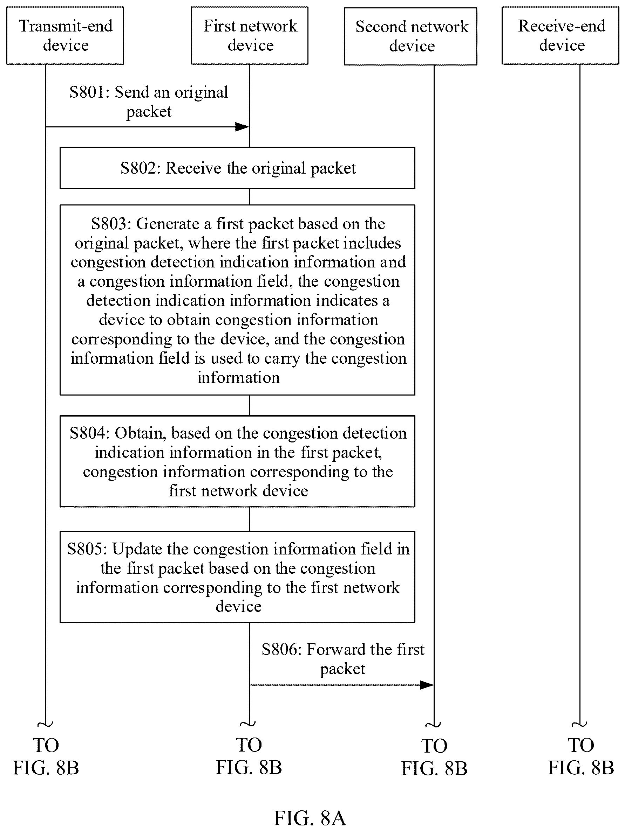

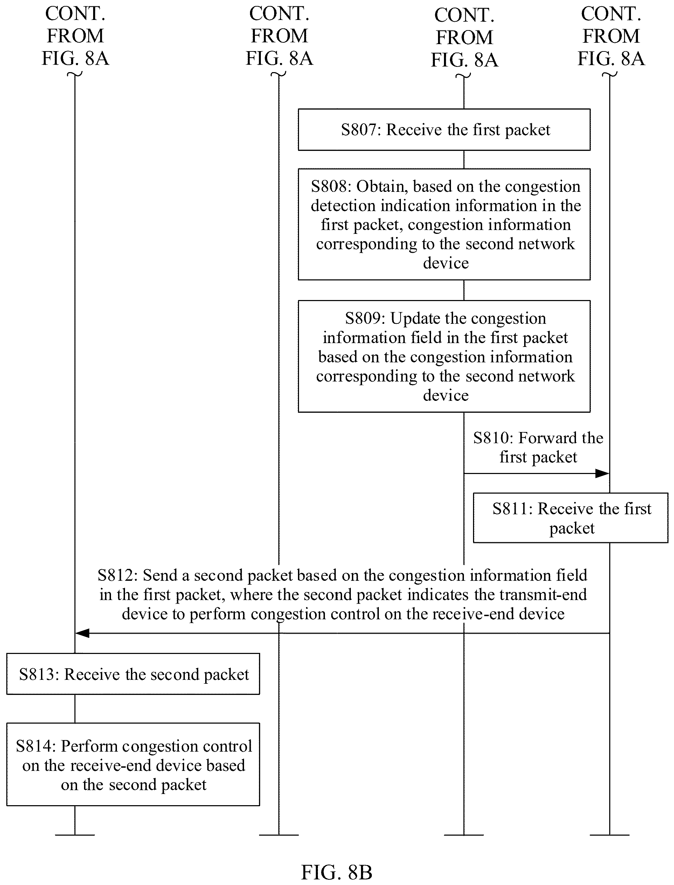

FIG. 8A and FIG. 8B are a flowchart of yet another congestion control method according to an embodiment of this application. The congestion control method is applied to a congestion control system including a transmit-end device, a receive-end device, and a network device. For example, the congestion control system is shown in FIG. 1. The congestion control method includes steps S801 to S814 below.

S801: The transmit-end device sends an original packet.

S802: A first network device receives the original packet from the transmit-end device.

S803: The first network device generates a first packet based on the original packet. The first packet includes congestion detection indication information and a congestion information field. The congestion detection indication information indicates a device to obtain congestion information corresponding to the device, and the congestion information field is used to carry the congestion information.

S804: The first network device obtains, based on the congestion detection indication information in the first packet, congestion information corresponding to the first network device.

S805: The first network device updates the congestion information field in the first packet based on the congestion information corresponding to the first network device.

S806: The first network device forwards the first packet.

S807: A second network device receives the first packet.

S808: The second network device obtains, based on the congestion detection indication information in the first packet, congestion information corresponding to the second network device.

S809: The second network device updates the congestion information field in the first packet based on the congestion information corresponding to the second network device.

S810: The second network device forwards the first packet.

S811: The receive-end device receives the first packet.

S812: The receive-end device sends a second packet to the transmit-end device based on the congestion information field in the first packet. The second packet indicates the transmit-end device to perform congestion control on the receive-end device.

S813: The transmit-end device receives the second packet from the receive-end device.

S814: The transmit-end device performs congestion control on the receive-end device based on the second packet.

The first network device in the embodiment shown in FIG. 8A and FIG. 8B may be a network device directly connected to the transmit-end device, and the second network device is a network device between the first network device and the receive-end device on a transmission path of the first packet. For implementation processes of S801 to S803, refer to the third embodiment in which the first device obtains the first packet in S201. For implementation processes of S804 to S806 and implementation processes of S808 to S810, refer to the implementation processes of S202 to S204. For an implementation process of S807, refer to the second embodiment in which the first device obtains the first packet in S201. For implementation processes of S811 and S812, refer to the implementation processes of S501 and S501. For implementation processes of S813 and S814, refer to the implementation processes of S205 and S206.

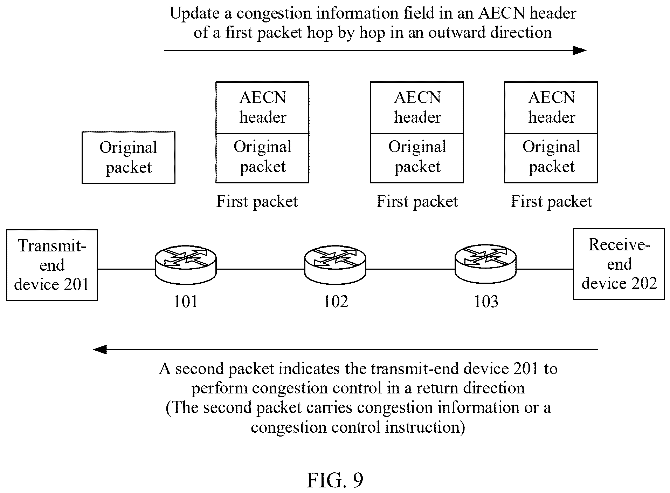

For example, FIG. 9 is a diagram of another congestion control method according to an embodiment of this application. FIG. 9 is described by using an example in which the congestion control method is applied to the congestion control system shown in FIG. 1, a packet sent by a transmit-end device does not include congestion detection indication information and a congestion information field, and a network device generates, based on the packet sent by the transmit-end device, a first packet including the congestion detection indication information and the congestion information field. As shown in FIG. 9, an original packet sent by the transmit-end device 201 does not include an AECN header, and the network device 101 encapsulates the AECN header into the original packet to obtain the first packet. Description is provided by using an example in which the AECN header includes the congestion detection indication information and the congestion information field (for brevity, the congestion detection indication information and the congestion information field are not shown in the AECN header in FIG. 9). A transmission path of the first packet is: the network device 101 -> the network device 102 -> the network device 103 -> the receive-end device 202. In a process in which the first packet is sent from the network device 101 to the receive-end device 202, the devices on the transmission path update the congestion information field in the AECN header of the first packet hop by hop (that is, update the congestion information in the congestion information field). After the receive-end device 202 receives the first packet, the receive-end device 202 sends a second packet to the transmit-end device 201 based on the first packet. The second packet includes at least one of the congestion information in the congestion information field and a congestion control instruction determined based on the congestion information. The second packet indicates the transmit-end device 201 to perform congestion control on the receive-end device 202. The transmit-end device 201 adjusts, based on the second packet, a send window, a sending rate, and the like that are used by the transmit-end device 201 to send a packet to the receive-end device 202, to perform congestion control on the receive-end device 202.

The foregoing describes method embodiments of this application, and the following describes apparatus embodiments of this application. The apparatus in this application may be configured to perform the method in this application. For details that are not disclosed in the apparatus embodiments of this application, refer to the method embodiments.

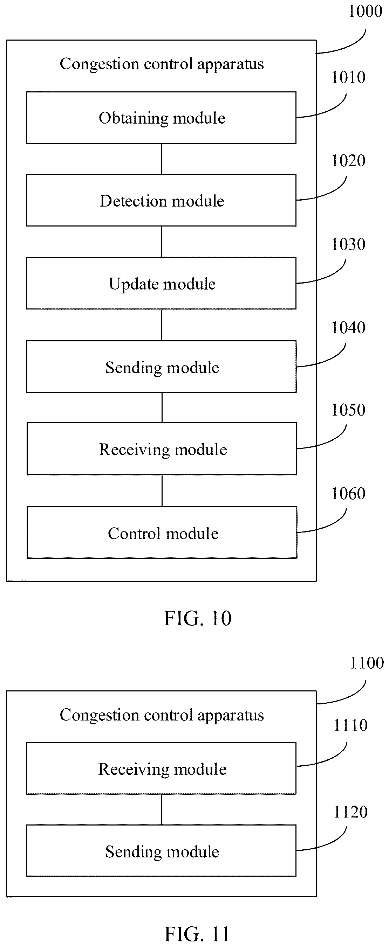

FIG. 10 is a diagram of a congestion control apparatus 1000 according to an embodiment of this application. The congestion control apparatus 1000 is used in a first device. For example, the congestion control apparatus 1000 is the first device or a functional component in the first device. The congestion control apparatus 1000 may implement the congestion control method provided in the embodiment shown in FIG. 2 or FIG. 4, or implement the steps performed by the transmit-end device and the network device in the congestion control methods provided in the embodiments shown in FIG. 6 and FIG. 8A and FIG. 8B. As shown in FIG. 10, the congestion control apparatus 1000 includes an obtaining module 1010, a detection module 1020, and an update module 1030.

The obtaining module 1010 is configured to obtain a first packet. The first packet includes congestion detection indication information and a congestion information field. The congestion detection indication information indicates a device to obtain congestion information corresponding to the device, and the congestion information field is used to carry the congestion information. For function implementation of the obtaining module 1010, refer to the related descriptions in S201.

The detection module 1020 is configured to obtain, based on the congestion detection indication information, congestion information corresponding to the first device. For function implementation of the detection module 1020, refer to the related descriptions in S202.

The update module 1030 is configured to update the congestion information field based on the congestion information corresponding to the first device. For function implementation of the update module 1030, refer to the related descriptions in S203.

Optionally, the congestion information includes at least one of first congestion information and second congestion information. The first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet. The accumulated processing delay is an accumulated value of a processing delay of the first packet in the device on the transmission path of the first packet.

Optionally, the utilization rate of the interface includes at least one of the following: bandwidth utilization of the interface, and link utilization of the interface.

Optionally, the congestion detection indication information indicates the device to obtain the first congestion information corresponding to the device, and the congestion information field is used to carry the first congestion information. The detection module 1020 is configured to obtain, based on the congestion detection indication information, the first congestion information corresponding to the first device. Correspondingly, the update module 1030 is configured to: when a relationship between the first congestion information corresponding to the first device and the first congestion information in the congestion information field meets a preset condition, update the first congestion information in the congestion information field based on the first congestion information corresponding to the first device.

Optionally, the preset condition includes any one of the following: a value of the first congestion information corresponding to the first device is greater than a value of the first congestion information in the congestion information field; or a value of the first congestion information corresponding to the first device is less than or equal to a value of the first congestion information in the congestion information field.

Optionally, the congestion detection indication information indicates the device to obtain the second congestion information corresponding to the device, and the congestion information field is used to carry the second congestion information. The detection module 1020 is configured to obtain, based on the congestion detection indication information, the second congestion information corresponding to the first device. Correspondingly, the update module 1030 is configured to update the second congestion information in the congestion information field based on the second congestion information corresponding to the first device.

Optionally, the first packet includes an AECN header, and the AECN header includes the congestion detection indication information and the congestion information field.

Optionally, the first packet includes an IPv6 extension header, and the AECN header is in the IPv6 extension header.

Optionally, the first packet includes an ICMP header, and the AECN header is in the ICMP header.

Optionally, the first device is a transmit-end device, and the obtaining module 1010 is configured to generate the first packet.

Optionally, the first device is a network device, and the obtaining module 1010 is configured to receive the first packet from a transmit-end device.

Optionally, the first device is a network device, and the obtaining module 1010 is configured to receive an original packet from a transmit-end device; and generate the first packet based on the original packet.

Optionally, the obtaining module 1010 is configured to construct the first packet based on the original packet; or encapsulate the congestion detection indication information and the congestion information field into the original packet, to obtain the first packet; or copy the original packet to obtain a copied packet, and encapsulate the congestion detection indication information and the congestion information field into the copied packet, to obtain the first packet.

Optionally, still with reference to FIG. 10, the congestion control apparatus 1000 further includes a sending module 1040, configured to send the first packet after the update module 1030 updates the congestion information field based on the congestion information corresponding to the first device. For function implementation of the sending module 1040, refer to the related descriptions in S204.

Optionally, the first device is a transmit-end device. Still with reference to FIG. 10, the congestion control apparatus 1000 further includes:
a receiving module 1050, configured to receive a second packet from a second device, where the second packet corresponds to the first packet. For function implementation of the sending module 1040, refer to the related descriptions in S205.

A control module 1060 is configured to perform congestion control on a receive-end device of the first packet based on the second packet. For function implementation of the control module 1060, refer to the related descriptions in S206.

Optionally, the second packet includes at least one of the following: the congestion information in the congestion information field; and a congestion control instruction, where the congestion control instruction is determined based on the congestion information in the congestion information field.

Optionally, the second packet is a probe packet or an acknowledgment packet of a transport layer.

Optionally, the first packet is a service packet, a probe packet, or a copied packet of a service packet.

Optionally, the second device is the receive-end device or a network device.

In conclusion, in the technical solutions provided in embodiments of this application, the congestion detection indication information and the congestion information field are set in the first packet. The congestion detection indication information indicates the device to obtain the congestion information corresponding to the device. The congestion information field is used to carry the congestion information. In this case, a device on a path of the first packet obtains, based on the congestion detection indication information, congestion information corresponding to the device, and updates the congestion information field based on the congestion information corresponding to the device. The congestion information field can carry a large amount of congestion information. This helps an end-side device perform accurate congestion control based on the congestion information carried in the congestion information field. In addition, in the technical solutions provided in embodiments of this application, the device on the path of the first packet updates the congestion information in the congestion information field in the first packet in a process of forwarding the first packet, instead of adding congestion information to the first packet hop by hop, to avoid a case in which the first packet increases hop by hop. The technical solutions ensure encapsulation efficiency of the first packet, and can be applied to a long-distance multi-hop transmission scenario.

FIG. 11 is a diagram of another congestion control apparatus 1100 according to an embodiment of this application. The congestion control apparatus 1100 is used in a second device. For example, the congestion control apparatus 1100 is the second device or a functional component in the second device. The second device may implement the congestion control method provided in the embodiment shown in FIG. 5, or implement the steps performed by the receive-end device in the congestion control methods provided in the embodiments shown in FIG. 6 and FIG. 8A and FIG. 8B. As shown in FIG. 11, the congestion control apparatus 1100 includes a receiving module 1110 and a sending module 1120.

The receiving module 1110 is configured to receive a first packet. The first packet includes congestion detection indication information and a congestion information field. The congestion detection indication information indicates a device to obtain congestion information corresponding to the device, and the congestion information field is used to carry the congestion information. For function implementation of the receiving module 1110, refer to the related descriptions in S501.

The sending module 1120 is configured to send a second packet to a transmit-end device based on the congestion information field, where the second packet indicates the transmit-end device to perform congestion control on a receive-end device of the first packet. For function implementation of the sending module 1120, refer to the related descriptions in S502.

Optionally, the second packet includes at least one of the following: the congestion information in the congestion information field; and a congestion control instruction, where the congestion control instruction is determined based on the congestion information in the congestion information field.

Optionally, the congestion information includes at least one of first congestion information and second congestion information. The first congestion information includes at least one of the following: utilization of a queue that is used to buffer the first packet and that is in the device; utilization of an interface that is configured to send the first packet and that is in the device; and an accumulated congestion hop count on a transmission path of the first packet. The second congestion information includes an accumulated processing delay of the first packet. The accumulated processing delay is an accumulated value of a processing delay of the first packet in the device on the transmission path of the first packet.

Optionally, the utilization rate of the interface includes at least one of the following: bandwidth utilization of the interface, and link utilization of the interface.

Optionally, the first packet includes an AECN header, and the AECN header includes the congestion detection indication information and the congestion information field.

Optionally, the first packet includes an IPv6 extension header, and the AECN header is in the IPv6 extension header.

Optionally, the first packet includes an ICMP header, and the AECN header is in the ICMP header.

Optionally, the first packet is a service packet, a probe packet, or a copied packet of a service packet.

Optionally, the second packet is a probe packet or an acknowledgment packet of a transport layer.

Optionally, the second device is the receive-end device or a network device.

In conclusion, in the technical solutions provided in embodiments of this application, the congestion detection indication information and the congestion information field are set in the first packet. The congestion detection indication information indicates the device to obtain the congestion information corresponding to the device. The congestion information field is used to carry the congestion information. In this case, a device on a path of the first packet obtains, based on the congestion detection indication information, congestion information corresponding to the device, and updates the congestion information field based on the congestion information corresponding to the device. The second device sends the second packet to the transmit-end device based on the congestion information field. The transmit-end device performs congestion control on the receive-end device of the first packet based on the second packet. The congestion information field can carry a large amount of congestion information. Therefore, the second packet sent by the second device to the transmit-end device based on the congestion information field may indicate the transmit-end device to perform accurate congestion control on the receive-end device.

The congestion control apparatus provided in this embodiment of this application may alternatively be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. The method provided in the foregoing method embodiment may also be implemented by using software. When the method provided in the foregoing method embodiment is implemented by using software, each module in the foregoing congestion control apparatus may also be a software module.

An embodiment of this application provides a congestion control apparatus, including a memory and a processor. The memory is configured to store a computer program. The processor is configured to execute the computer program stored in the memory, so that the congestion control apparatus performs all or a part of the steps of the congestion control method provided in the foregoing embodiments.

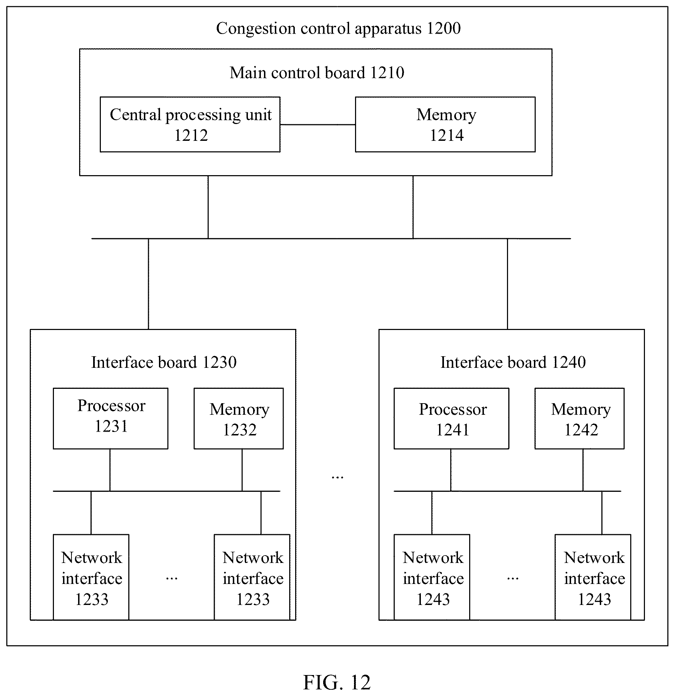

For example, FIG. 12 is a diagram of still another congestion control apparatus 1200 according to an embodiment of this application. The congestion control apparatus 1200 is a network device or a functional component in a network device. The congestion control apparatus 1200 is configured to perform the steps performed by the network device in the congestion control method provided in the embodiment shown in FIG. 2, FIG. 4, FIG. 6, or FIG. 8A and FIG. 8B. As shown in FIG. 12, the congestion control apparatus 1200 includes a main control board 1210, an interface board 1230, and an interface board 1240. In a case of a plurality of interface boards, a switch board (not shown in FIG. 12) is further included. The switch board is configured to complete data exchange between the interface boards (where the interface board is also referred to as a line card or a service board).

The main control board 1210 is configured to complete functions such as system management, device maintenance, and protocol processing. The interface board 1230 and the interface board 1240 are configured to provide various service interfaces (for example, a POS interface, a GE interface, and an ATM interface), and implement packet forwarding. The main control board 1210 mainly includes three types of functional units: a system management and control unit, a system clock unit, and a system maintenance unit. The main control board 1210, the interface board 1230, and the interface board 1240 are connected to a system backplane through a system bus to implement interworking. The interface board 1230 includes one or more processors 1231. The processor 1231 is configured to control and manage the interface board 1230, and communicate with a central processing unit 1212 on the main control board 1210. The memory 1232 on the interface board 1230 is configured to store AECN-related configuration information. The interface board 1230 includes one or more network interfaces 1233, configured to receive and send packets. A specific implementation process is not described herein. As shown in FIG. 12, the main control board 1210 further includes a memory 1214. The memory 1214 is configured to store system management information, a protocol, and the like. This is not limited in embodiments of this application.

As shown in FIG. 12, this embodiment includes a plurality of interface boards and uses a distributed forwarding mechanism. In this mechanism, an operation on the interface board 1240 is basically similar to an operation on the interface board 1230. For example, the interface board 1240 includes one or more network interfaces 1243 for receiving and sending packets, includes a memory 1242 for storing AECN-related configuration information, and includes a processor 1241 for controlling and managing the interface board 1240 and communicating with a central processing unit 1212 on the main control board 1210. For brevity, the interface board 1240 is not described herein again.

The processor 1231 in the interface board 1230 and/or the processor 1241 in the interface board 1240 in FIG. 12 may be dedicated hardware or a chip, for example, a network processor or an application-specific integrated circuit, to implement the foregoing functions. This implementation is usually referred to as a manner of using dedicated hardware or a chip for processing on a forwarding plane. In another implementation, the processor 1231 in the interface board 1230 and/or the processor 1241 in the interface board 1240 may alternatively use a general-purpose processor, for example, a central processing unit (central processing unit, CPU).

In addition, it should be noted that there may be one or more main control boards. When there are a plurality of main control boards, the main control boards may include an active main control board and a standby main control board. There may be one or more interface boards. A network device with a stronger data processing capability provides a larger quantity of interface boards. In a case of a plurality of interface boards, the plurality of interface boards may communicate with each other through one or more switch boards, and the plurality of interface boards may jointly implement load sharing and redundancy backup. In a centralized forwarding architecture, the network device may not need the switch board, and the interface board provides a function of processing service data of an entire system. In a distributed forwarding architecture, the network device includes a plurality of interface boards, data exchange between the plurality of interface boards may be implemented by using the switch board, and a large-capacity data exchange and processing capability is provided. Therefore, a data access and processing capability of the network device in the distributed architecture is greater than that of the network device in the centralized architecture. A specific architecture to be used depends on a networking deployment scenario, and is not limited herein.

In an optional implementation, the memory 1232 and/or the memory 1242 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, optical disc storage (including a compressed optical disc, a laser disc, an optical disc, a digital versatile optical disc, a Blu-ray disc, and the like), a magnetic disk or another magnetic storage device, or any other medium that can be used to carry or store expected program code in a form of instructions or a data structure and that can be accessed by a computer. However, the memory is not limited thereto. The memory 1232 may exist independently, and is connected to the processor 1231 through a communication bus, or may be integrated with the processor 1231. The memory 1242 may exist independently, and is connected to the processor 1241 through a communication bus, or may be integrated with the processor 1241.

The memory 1232 is configured to store program code, and the processor 1231 controls execution of the program code, to perform a part or all of the steps of the method provided in the foregoing embodiments. The processor 1231 is configured to execute the program code stored in the memory 1232. The program code may include one or more software modules. The one or more software modules may be the functional modules provided in the embodiment shown in FIG. 10. The memory 1242 may alternatively be configured to store program code, and the processor 1241 controls execution of the program code, to perform a part or all of the steps of the method provided in the foregoing embodiments. Likewise, the memory 1214 may alternatively be configured to store program code, and the central processing unit 1212 controls execution of the program code, to perform a part or all of the steps of the method provided in the foregoing embodiments.

In an optional implementation, the network interface 1233 and the network interface 1243 may be apparatuses that use any transceiver, and are configured to communicate with another device or a communication network, for example, an Ethernet, a radio access network (radio access network, RAN), or a wireless local area network (wireless local area network, WLAN).

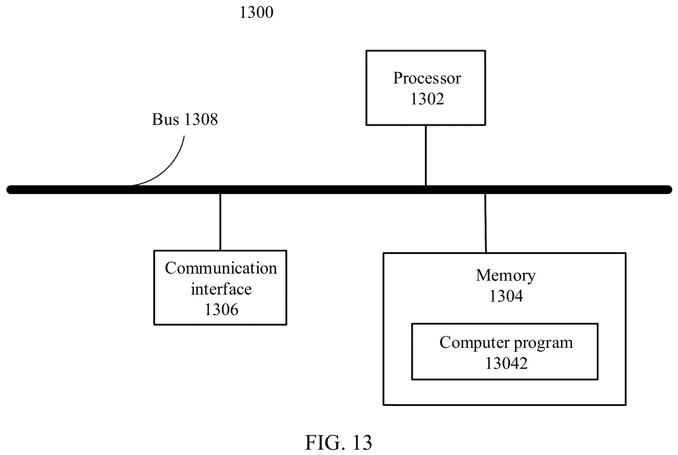

For another example, FIG. 13 is a diagram of yet another congestion control apparatus 1300 according to an embodiment of this application. The congestion control apparatus 1300 may be an end-side device or a functional component in an end-side device, or may be a network device or a functional component in a network device. The congestion control apparatus 1300 may implement the congestion control method provided in any one of the embodiments shown in FIG. 2, FIG. 4 to FIG. 6, and FIG. 8A and FIG. 8B. With reference to FIG. 13, the congestion control apparatus 1300 includes a processor 1302, a memory 1304, a communication interface 1306, and a bus 1308. The processor 1302, the memory 1304, and the communication interface 1306 are communicatively connected by using the bus 1308. The processor 1302, the memory 1304, and the communication interface 1306 may also be connected in a connection manner other than the bus 1308. A connection manner of the processor 1302, the memory 1304, and the communication interface 1306 is not limited in this embodiment of this application.

The memory 1304 is configured to store a computer program 13042. The computer program 13042 includes instructions and data. The memory 1304 is various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 1302 may be a general-purpose processor. The general-purpose processor may be a processor that reads and executes a computer program stored in a memory (for example, the memory 1304) to perform a specific step and/or operation. In a process of performing the steps and/or operations, the general-purpose processor may use data stored in the memory (for example, the memory 1304). The stored computer program is executed, for example, to implement related functions of the obtaining module 1010, the detection module 1020, the update module 1030, the control module 1060, and the like. The general-purpose processor may be a central processing unit (central processing unit, CPU). The processor 1302 may alternatively be a dedicated processor. The dedicated processor is a processor specially designed to perform a specific step and/or operation. The dedicated processor may be a digital signal processor (digital signal processor, DSP), an application-specific integrated circuit (application-specific integrated circuit, ASIC), a field-programmable gate array (field-programmable gate array, FPGA), an NP, or the like. The processor 1302 may alternatively be a combination of a plurality of processors, for example, a multi-core processor. The processor 1302 includes at least one circuit, to perform all or a part of the steps of the congestion control method provided in the foregoing embodiments.

The communication interface 1306 includes an input/output (input/output, I/O) interface, a physical interface, a logical interface, and other interfaces that are configured to implement interconnection between components in the congestion control apparatus 1300, and an interface that is configured to implement interconnection between the congestion control apparatus 1300 and another apparatus (for example, a network device or an end-side device). The physical interface may be a gigabit Ethernet interface (gigabit Ethernet, GE), and is configured to implement interconnection between the congestion control apparatus 1300 and another device. The logical interface is an internal interface of the congestion control apparatus 1300, and is configured to implement interconnection between components in the congestion control apparatus 1300. It is easy to understand that the communication interface 1306 is configured to implement communication between the congestion control apparatus 1300 and another device. For example, the communication interface 1306 is configured to send and receive information, a packet, and the like between the congestion control apparatus 1300 and the another device. The communication interface 1306 can implement related functions of the receiving module and the sending module.

The bus 1308 may be any type of communication bus, for example, a system bus, configured to implement interconnection between the processor 1302, the memory 1304, and the communication interface 1306.

The foregoing components may be separately disposed on chips that are independent of each other, or at least a part or all of the components may be disposed on a same chip. Whether the components are separately disposed on different chips or integrated and disposed on one or more chips usually depends on a requirement of a product design. Embodiments of this application impose no limitation on specific implementations of the foregoing components.

The congestion control apparatus 1300 shown in FIG. 13 is merely an example. In an implementation process, the congestion control apparatus 1300 may further include other components that are not listed one by one in this specification. The congestion control apparatus 1300 shown in FIG. 13 performs all or a part of the steps of the congestion control method provided in the foregoing method embodiments, to perform operations related to congestion control.

An embodiment of this application provides a congestion control system, including a first device and a second device. The first device includes the congestion control apparatus shown in FIG. 10, FIG. 12, or FIG. 13, and the second device includes the congestion control apparatus shown in any one of FIG. 11 to FIG. 13.

The first device is a transmit-end device or a network device, and the second device is a receive-end device or a network device.

For example, the congestion control system is shown in FIG. 1, the first device is the transmit-end device 201 or any network device in the network devices 101 to 103, and the second device is the receive-end device 202.

An embodiment of this application provides a computer-readable storage medium. The computer-readable storage medium stores a computer program. When the computer program is executed (for example, executed by an end-side device, a network device, or one or more processors), all or a part of the steps of the congestion control method provided in the foregoing method embodiment are implemented.

An embodiment of this application provides a computer program product. The computer program product includes a program or code. When the program or the code is executed (for example, executed by an end-side device, a network device, or one or more processors), all or a part of the steps of the congestion control method provided in the foregoing method embodiment are implemented.

An embodiment of this application provides a chip. The chip includes a programmable logic circuit and/or program instructions. When the chip runs, the chip is configured to implement all or a part of the steps of the congestion control method provided in the foregoing method embodiment.

All or a part of the foregoing embodiments may be implemented by using software, hardware, firmware, or any combination thereof. When embodiments are implemented by using the software, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that in this application, the term "at least one" means one or more, and the term "a plurality of" means two or more than two. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. A sequence of operations in the method embodiments provided in embodiments of this application can be appropriately adjusted, and the operations operation can be correspondingly added or deleted based on a situation. Any variation method that can be readily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the apparatus embodiments described above are merely examples. For example, division of modules is merely division of logical functions and there may be other division manners in actual implementation. For example, a plurality of modules or components may be combined or may be integrated to another system, or some features may be ignored or not executed.

The modules described as separate parts may or may not be physically separate, and the parts described as modules may or may not be physical modules, may be located in one position, or may be distributed on a plurality of devices. A part or all the modules may be selected according to actual needs to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A congestion control method, wherein the method comprises:
obtaining, by a first device, a first packet, wherein the first packet comprises congestion detection indication information and a congestion information field, the congestion detection indication information indicates a device to obtain congestion information corresponding to the device, and the congestion information field is used to carry the congestion information;
obtaining, by the first device based on the congestion detection indication information, congestion information corresponding to the first device; and
updating, by the first device, the congestion information field based on the congestion information corresponding to the first device.

2. The method according to claim 1, wherein
the congestion information comprises at least one of first congestion information and second congestion information;
the first congestion information comprises at least one of the following:
utilization of a queue that is used to buffer the first packet and that is in the device;
utilization of an interface that is configured to send the first packet and that is in the device; and
an accumulated congestion hop count on a transmission path of the first packet; and
the second congestion information comprises an accumulated processing delay of the first packet, and the accumulated processing delay is an accumulated value of a processing delay of the first packet in the device on the transmission path of the first packet.

3. The method according to claim 2, wherein the utilization rate of the interface comprises at least one of the following:
bandwidth utilization of the interface, and link utilization of the interface.

4. The method according to claim 2 or 3, wherein the congestion detection indication information indicates the device to obtain the first congestion information corresponding to the device, and the congestion information field is used to carry the first congestion information;
obtaining, by the first device based on the congestion detection indication information, the congestion information corresponding to the first device comprises: obtaining, by the first device based on the congestion detection indication information, the first congestion information corresponding to the first device; and
updating, by the first device, the congestion information field based on the congestion information corresponding to the first device comprises: when a relationship between the first congestion information corresponding to the first device and the first congestion information in the congestion information field meets a preset condition, updating, by the first device, the first congestion information in the congestion information field based on the first congestion information corresponding to the first device.

5. The method according to claim 4, wherein the preset condition comprises any one of the following: a value of the first congestion information corresponding to the first device is greater than a value of the first congestion information in the congestion information field; or a value of the first congestion information corresponding to the first device is less than or equal to a value of the first congestion information in the congestion information field.

6. The method according to claim 2 or 3, wherein the congestion detection indication information indicates the device to obtain the second congestion information corresponding to the device, and the congestion information field is used to carry the second congestion information;
obtaining, by the first device based on the congestion detection indication information, the congestion information corresponding to the first device comprises: obtaining, by the first device based on the congestion detection indication information, the second congestion information corresponding to the first device; and
updating, by the first device, the congestion information field based on the congestion information corresponding to the first device comprises: updating, by the first device, the second congestion information in the congestion information field based on the second congestion information corresponding to the first device.

7. The method according to any one of claims 1 to 6, wherein the first packet comprises an advanced explicit congestion notification AECN header, and the AECN header comprises the congestion detection indication information and the congestion information field.

8. The method according to claim 7, wherein the first packet comprises an internet protocol version 6 IPv6 extension header, and the AECN header is in the IPv6 extension header.

9. The method according to claim 7, wherein the first packet comprises an internet control message protocol ICMP header, and the AECN header is in the ICMP header.

10. The method according to any one of claims 1 to 9, wherein the first device is a transmit-end device, and obtaining, by the first device, the first packet comprises: generating, by the first device, the first packet.

11. The method according to any one of claims 1 to 9, wherein the first device is a network device, and obtaining, by the first device, the first packet comprises: receiving, by the first device, the first packet from a transmit-end device.

12. The method according to any one of claims 1 to 9, wherein the first device is a network device, and obtaining, by the first device, the first packet comprises:
receiving, by the first device, an original packet from a transmit-end device; and
generating, by the first device, the first packet based on the original packet.

13. The method according to claim 12, wherein generating, by the first device, the first packet based on the original packet comprises:
constructing, by the first device, the first packet based on the original packet; or
encapsulating, by the first device, the congestion detection indication information and the congestion information field into the original packet, to obtain the first packet; or
copying, by the first device, the original packet to obtain a copied packet, and encapsulating, by the first device, the congestion detection indication information and the congestion information field into the copied packet, to obtain the first packet.

14. The method according to any one of claims 1 to 13, wherein after updating, by the first device, the congestion information field, the method further comprises: sending, by the first device, the first packet.

15. The method according to any one of claims 1 to 14, wherein the first device is a transmit-end device, and the method further comprises:
receiving, by the first device, a second packet from a second device, wherein the second packet corresponds to the first packet; and
performing, by the first device, congestion control on a receive-end device of the first packet based on the second packet.

16. The method according to claim 15, wherein the second packet comprises at least one of the following:
the congestion information in the congestion information field; and
a congestion control instruction, wherein the congestion control instruction is determined based on the congestion information in the congestion information field.

17. The method according to claim 15 or 16, wherein
the second packet is a probe packet or an acknowledgment packet of a transport layer.

18. The method according to any one of claims 15 to 17, wherein
the second device is the receive-end device or a network device.

19. The method according to any one of claims 1 to 18, wherein
the first packet is a service packet, a probe packet, or a copied packet of the service packet.

20. A congestion control method, wherein the method comprises:
receiving, by a second device, a first packet, wherein the first packet comprises congestion detection indication information and a congestion information field, the congestion detection indication information indicates a device to obtain congestion information corresponding to the device, and the congestion information field is used to carry the congestion information; and
sending, by the second device, a second packet to a transmit-end device based on the congestion information field, wherein the second packet indicates the transmit-end device to perform congestion control on a receive-end device of the first packet.

21. The method according to claim 20, wherein the second packet comprises at least one of the following:
the congestion information in the congestion information field; and
a congestion control instruction, wherein the congestion control instruction is determined based on the congestion information in the congestion information field.

22. The method according to claim 20 or 21, wherein
the congestion information comprises at least one of first congestion information and second congestion information;
the first congestion information comprises at least one of the following:
utilization of a queue that is used to buffer the first packet and that is in the device;
utilization of an interface that is configured to send the first packet and that is in the device; and
an accumulated congestion hop count on a transmission path of the first packet; and
the second congestion information comprises an accumulated processing delay of the first packet, and the accumulated processing delay is an accumulated value of a processing delay of the first packet in the device on the transmission path of the first packet.

23. The method according to claim 22, wherein the utilization rate of the interface comprises at least one of the following:
bandwidth utilization of the interface, and link utilization of the interface.

24. The method according to any one of claims 20 to 23, wherein the first packet comprises an advanced explicit congestion notification AECN header, and the AECN header comprises the congestion detection indication information and the congestion information field.

25. The method according to claim 24, wherein the first packet comprises an internet protocol version 6 IPv6 extension header, and the AECN header is in the IPv6 extension header.

26. The method according to claim 24, wherein the first packet comprises an internet control message protocol ICMP header, and the AECN header is in the ICMP header.

27. The method according to any one of claims 20 to 26, wherein
the first packet is a service packet, a probe packet, or a copied packet of the service packet.

28. The method according to any one of claims 20 to 27, wherein
the second packet is a probe packet or an acknowledgment packet of a transport layer.

29. The method according to any one of claims 20 to 28, wherein
the second device is the receive-end device or a network device.

30. A congestion control apparatus, comprising a memory and a processor, wherein
the memory is configured to store a computer program; and
the processor is configured to execute the computer program stored in the memory, so that the congestion control apparatus performs the congestion control method according to any one of claims 1 to 19.

31. A congestion control apparatus, comprising a memory and a processor, wherein
the memory is configured to store a computer program; and
the processor is configured to execute the computer program stored in the memory, so that the congestion control apparatus performs the congestion control method according to any one of claims 20 to 29.

32. A congestion control system, comprising a first device and a second device, wherein
the first device comprises the congestion control apparatus according to claim 30; and
the second device comprises the congestion control apparatus according to claim 31.

33. A computer-readable storage medium, wherein the computer-readable storage medium stores a computer program, and when the computer program is executed, the congestion control method according to any one of claims 1 to 29 is implemented.

34. A computer program product, wherein the computer program product comprises a program or code, and when the program or the code is executed, the congestion control method according to any one of claims 1 to 29 is implemented.
